# EUROPÄISCHE PATENTSCHRIFT

(11) **EP 1 379 041 B1**
(45) Veröffentlichungstag und Bekanntmachung des Hinweises auf die Patenterteilung: **26.09.2007**
(21) Anmeldenummer: 03012384.8
(22) Anmeldetag: 30.05.2003
(51) Int. Cl.: H04L 25/08, H04L 1/22

(54) **Verfahren und Sendevorrichtung zum Übertragen einer Impulsfolge**
Method and transmission apparatus for transmitting a pulse train
Méthode et dispositif de transmission d'un train d'impulsions

(30) Priorität: 03.07.2002 DE 10229860
(43) Veröffentlichungstag der Anmeldung: 07.01.2004
(73) Patentinhaber: Infineon Technologies AG, 81809 München (DE)
(72) Erfinder: Taghizadeh-Kaschani, Karim-Thomas, 85586 Poing (DE)
(74) Vertreter: Bickel, Michael

(56) Entgegenhaltungen:
- WO-A-01/31796
- US-A- 4 633 473
- US-A- 4 811 359
- US-A- 5 754 552

## Beschreibung

Die vorliegende Erfindung betrifft ein Verfahren und eine Sendevorrichtung zum Übertragen wenigstens eines Signals über einen Kanal, insbesondere über einen eine Potentialbarriere enthaltenden Kanal.

In elektrischen Schaltungen ist es vielfach erforderlich, elektrische Signale über einen eine Potentialbarriere enthaltenden Kanal zu übertragen, um eine das elektrische Signal erzeugende Schaltung und eine das elektrische Signal aufnehmende oder durch dieses angesteuerte Schaltung potentialmäßig zu trennen. Beispiele für solche Schaltungen sind Signaltransmitter in der Nachrichtentechnik, galvanisch isolierte Übertragungsschnittstellen in der Industrieelektronik oder als Sperrwandler ausgebildete Schaltwandler, bei denen ein von der Ausgangsspannung des Schaltwandlers abhängiges Regelsignal an eine einen Schalter ansteuernde Ansteuerschaltung übertragen werden muss. Ein weiteres Beispiel sind Treiberschaltungen von Leistungstransistoren, insbesondere von sogenannten High-Side Schaltern, wobei Steuersignale eines Mikrocontrollers, die üblicherweise Spannungspegel von 3,3V oder 5V bezogen auf ein Bezugspotential aufweisen, an eine Treiberschaltung zu übertragen sind, die bei wesentlich größeren Spannungen oder bei einem anderen Bezugspotential arbeiten.

Bei Verfahren zur Übertragung von elektrischen Signalen über Potentialbarrieren ist es grundsätzlich bekannt, das Signal von der Senderseite der Barriere mittels kapazitiver, induktiver oder optischer Kopplungsverfahren an die Empfängerseite der Potentialbarriere zu übertragen.

Die Signalübertragung über solche Potentialbarrieren kann jedoch von außen gestört werden. So können stark veränderliche elektrische oder magnetische Felder dazu führen dass das zu übertragende Signal gestört oder verfälscht wird, oder dass der Kanal vollständig blockiert wird, wenn ein Störsignal so leistungsstark ist, dass das zu übertragende Nutzsignal vollständig ausgelöscht wird.

Soll beispielsweise ein zweiwertiges Signal über eine solche Potentialbarriere übertragen werden, so ist es aus der US 4,027,152 bekannt, das zweiwertige Signal in eine Impulsfolge umzusetzen, wobei ein positiver Impuls übertragen wird, wenn der Pegel des zu übertragenden Signals von einer logischen Null auf eine logische Eins wechselt, und wobei bei einem Wechsel des Pegels von einer logischen Eins zu einer logischen Null ein negativer Impuls übertragen wird. Diese positiven oder negativen Impulse werden in regelmäßigen Zeitabständen wiederholt bzw. aufgefrischt, sofern das zweiwertige Signal zwischenzeitlich seinen Pegel nicht wechselt. Wird bei diesen Verfahren bedingt durch einen Störimpuls eine "Fehlinformation" an den Empfänger übertragen, so erfolgt mit dem nächsten Wiederauffrischungsimpuls eine Korrektur.

Weitere Verfahren bei, denen ein Impuls bzw. eine Impulsfolge wiederholt übertragen wird, um Fehler auf der Empfängerseite zu vermeiden, sind beispielsweise aus der US 5,952,849 und der US 6,262,600 B1 bekannt, wobei bei dem aus der US 6,262,600 B1 bekannten Verfahren für die Übertragung eines zweiwertigen Signals über eine Potentialbarriere ein periodisches Signal erzeugt wird, dessen Frequenz abhängig vom momentanen Pegel des zu übertragenden Signals zwei unterschiedliche Werte annimmt.

Bei den bekannten Verfahren wird ein aus dem zu übertragenden Sendesignal generierter Impuls bzw. eine Impulsfolge in regelmäßigen Zeitabständen wiederholt übertragen, unabhängig davon, ob Störungen auf dem Übertragungskanal auftreten. Dieses Vorgehen bedeutet einen nicht unerheblichen Energieaufwand, da für jede wiederholt zu übertragende Impulsfolge bzw. jeden wiederholt zu übertragenden Impuls Energie erforderlich ist. Zudem wird ein gestörtes Signal erst durch den nächsten Wiederauffrischungsimpuls korrigiert. Die bis dahin vergehende Zeitdauer entspricht im schlimmsten Fall der Periodendauer der Wiederauffrischungsimpulse.

Die US-A-4633473 beschreibt in deren Figur 4 ein Datenübertragungssystem für ein bidirektionales Datenübertragungsverfahren. Das Übertragungssystem weist zwei unabhängige Übertragungskanäle auf, über die jeweils die selben Informationen übertragen werden, wobei jedoch nur die über einen der Kanäle empfangenen Informationen weiterverarbeitet werden. An einen dieser beiden Kanäle, der als Primärkanal dient und dessen Empfangsdaten in einem fehlerfreien Betriebszustand weiterverarbeitet werden, sind Fehlerdetektoren angeschlossen, um bei einer Detektion von Fehlern auf diesem Kanal auf eine Weiterverarbeitung der Daten des zweiten Kanals umzuschalten.

Bei dem bekannten System werden die jeweils empfangenen Daten einer Gültigkeitsüberprüfung unterzogen, wobei der jeweilige Empfänger über den Übertragungskanal den jeweiligen Sender bei einem nicht-gültigen Datenempfang informiert, um den Sender zu veranlassen, die zuvor übertragene Nachricht erneut zu senden.

Ziel der vorliegenden Erfindung ist es, ein Verfahren und eine Vorrichtung für die Übertragung eines Signals über einen Kanal zur Verfügung zu stellen, wobei eine hohe Unempfindlichkeit gegenüber Störungen auf dem Kanal bei einem verringerten Energieverbrauch gewährleistet ist.

Dieses Ziel wird durch ein Verfahren gemäß der Merkmale des Anspruchs 1 und durch eine Vorrichtung gemäß der Merkmale des Anspruchs 13 gelöst. Vorteilhafte Ausgestaltungen der Erfindung sind Gegenstand der Unteransprüche.

Das erfindungsgemäße Verfahren zur Übertragung einer in einem Sendesignal enthaltenen Information über wenigstens einen Kanal sieht senderseitig vor, wenigstens eine wenigstens einen Impuls umfassende Impulsfolge nach Maßgabe des Sendesignals zu erzeugen und die Impulsfolge an den wenigstens einen Kanal auszugeben. Zudem wird der Kanal hinsichtlich des Vorhandenseins eines Störsignals überwacht und die Impulsfolge wird bei einer Detektion eines Störsignals auf dem Kanal wiederholt übertragen.

Bei dem erfindungsgemäßen Verfahren erfolgt eine Wiederauffrischung, das heißt eine erneute Übertragung, der von dem Sendesignal abhängigen Impulsfolge bedarfsabhängig nur dann, wenn eine Störung auf dem Kanal detektiert wird. Der Energieaufwand des erfindungsgemäßen Verfahrens ist gegenüber bekannten Verfahren dadurch reduziert. Eine Störimpuls auf dem Kanal kann empfängerseitig einen Fehler verursachen, der durch das wiederholte Senden der Impulsfolge bei Auftreten eines Störimpulses wieder korrigiert wird.

Bei der Störsignaldetektion kann nicht unterschieden werden, wodurch die Störung auf dem Kanal hervorgerufen wird. Das erfindungsgemäße Verfahren kann in Verbindung mit einem geeigneten Empfänger somit auch dazu verwendet werden, mittels einer durch den Empfänger auf dem Kanal hervorgerufenen Störung, einen Sendeimpuls durch den Sender zu provozieren und damit den aktuellen Senderzustand abzurufen.

Vorzugsweise wird die wenigstens eine Impulsfolge nach einer erfolgten Detektion des Störsignals erst dann übertragen, nachdem das Störsignal abgeklungen ist, wenn also kein Störsignal mehr detektiert wird.

Bei einer weiteren Ausführungsform ist vorgesehen, dass bei einer Detektion eines Störsignals noch vor einem ersten Senden der von dem Sendesignal abhängigen Impulsfolge die Impulsfolge erst gesendet wird, nachdem das Störsignal abgeklungen ist.

Darüber hinaus wird bei einer Ausführungsform die Impulsfolge nach einer Störsignaldetektion erst dann zum wiederholten Mal überragen, nachdem eine Übertragung der vom Sendesignal abhängigen Impulsfolge beendet ist, bzw., wenn bei Vorhandensein mehrerer Kanäle die Übertragung auf allen Kanälen beendet ist.

Ist zur Durchführung des erfindungsgemäßen Übertragungsverfahrens lediglich ein Übertragungskanal vorhanden, so muss die Störsignaldetektion unterbrochen werden, wenn die Impulsfolge übertragen wird, um die aus dem Sendesignal resultierende Impulsfolge nicht fälschlicherweise als Störsignal zu detektieren.

Um dauerhaft eine Störsignaldetektion durchführen zu können, ist bei einer Ausführungsform der Erfindung vorgesehen, einen ersten und einen zweiten Übertragungskanal vorzusehen, wobei eine wenigstens einen Impuls umfassende erste Impulsfolge nach Maßgabe des Sendesignals erzeugt und über den ersten Kanal übertragen wird, und wobei zeitlich versetzt zu der ersten Impulsfolge eine wenigstens einen Impuls umfassende zweite Impulsfolge erzeugt und über den zweiten Kanal übertragen wird. Da die erste und zweite Impulsfolge zeitlich versetzt zueinander erzeugt werden, ist gewährleistet, dass stets einer der beiden Kanäle hinsichtlich des Auftretens von Störsignalen überwacht werden kann, wobei die aus dieser Überwachung gewonnene Information zur Wiederholung von Impulsfolgen auf beiden Kanälen genutzt werden kann. Man macht sich hierbei die Erkenntnis zu Nutze, dass Störsignale üblicherweise beide Kanäle gleichermaßen beeinflussen, so dass eine auf dem Kanal, auf dem gerade keine Impulsfolge übertragen wird, erkannte Störung für den anderen Kanal dazu genutzt werden kann, die bei Auftreten der Störung gerade übertragene Impulsfolge zu wiederholen. Bei dieser Ausführungsform wird somit die erste Impulsfolge nach einem auf dem ersten und/oder zweiten Kanal detektierten Störsignal wiederholt übertragen, und die zweite Impulsfolge wird nach einem auf dem zweiten und/oder ersten Kanal detektierten Störsignal wiederholt übertragen.

Bei einer weiteren Ausführungsform ist vorgesehen, die Störsignaldetektion nicht auf einem der Übertragungskanäle durchzuführen, sondern einen separaten Sensor hierfür zu verwenden, der nach Art eines Übertragungskanals aufgebaut sein kann, über den aber keine Nutzsignale übertragen werden.

Das erfindungsgemäße Verfahren ist für beliebige Sendesignale anwendbar, nach deren Maßgabe eine wenigstens einen Impuls umfassende Impulsfolge erzeugt werden kann.

Das Sendesignal kann beispielsweise ein zweiwertiges, einen ersten oder zweiten Signalpegel aufweisendes Signal sein, das als Steuersignal für einen auf der Empfängerseite des Kanals angeordneten Verbraucher dient. Die wesentliche Information ist bei solchen zweiwertigen Signalen in bekannter Weise in dem Wechsel des Signalpegels enthalten, so dass es für die Übertragung der Information genügt, nach einem solchen Wechsel des Signalpegels einen geeigneten Impuls zu übertragen.

Bei einer Ausführungsform des Verfahrens, bei dem nur ein Übertragungskanal vorhanden ist, wird beispielsweise bei einem Wechsel des Signalpegels des Sendesignals von dem ersten Signalpegel zu dem zweiten Signalpegel ein bezogen auf ein Bezugspotential positiver Impuls und bei einem Wechsel des Signalpegels des Sendesignals von dem zweiten Signalpegel zu dem ersten Signalpegel ein bezogen auf ein Bezugspotential negativer Impuls erzeugt und übertragen. Wird zwischen diesen Impulsen ein Störsignal auf dem Kanal detektiert, so wird der jeweilige Impuls wiederholt, sofern der Pegel des Sendesignals zwischenzeitlich nicht gewechselt hat.

Das Verfahren ist selbstverständlich auch bei pulscodemodulierten Übertragungsverfahren anwendbar, bei denen abhängig von einem Sendesignal Impulsfolgen mit jeweils mehr als einem Impuls erzeugt werden. So wird bei einem Wechsel des Signalpegels des Sendesignals von dem ersten zu dem zweiten Pegel eine erste, mehrere Impulse umfassende Impulsfolge erzeugt und übertragen, und bei einem Wechsel des Signalpegels des Sendesignals von dem zweiten zu dem ersten Pegel wird eine zweite, mehrere Impulse umfassende Impulsfolge erzeugt und übertragen, wobei sich die erste und zweite Impulsfolge unterscheiden. Jeweils eine dieser beiden Impulsfolgen wird nach einer Detektion eines Störsignals auf dem Kanal wiederholt übertragen.

Bei einer Ausführungsform des Verfahrens, bei der ein erster Übertragungskanal und ein zweiter Übertragungskanal zur Verfügung stehen, wird bei einem Wechsel des Signalpegels des Sendesignals von dem ersten Signalpegel zu dem zweiten Signalpegel die wenigstens einen Impuls umfassende erste Impulsfolge erzeugt und über den ersten Kanal übertragen, und bei einem Wechsel des Signalpegels des Sendesignals von dem zweiten Signalpegel zu dem ersten Signalpegel wird die wenigstens einen Impuls umfassende zweite Impulsfolge erzeugt und über den zweiten Kanal übertragen. Die erste und zweite Impulsfolge können dabei hinsichtlich ihrer Form, das heißt der Anzahl der Impulse und des zeitlichen Ablaufs, übereinstimmen.

Die wenigstens eine Impulsfolge, die gemäß dem erfindungsgemäßen Verfahrens nach einer Detektion eines Störsignals wiederholt übertragen wird, kann selbstverständlich von mehreren Sendesignalen abhängig sein und nahezu beliebig viele Impulse umfassen, sofern die zeitliche Dauer der Impulsfolge geringer ist als der zeitliche Abstand mit dem Pegeländerungen des zu übertragenden Sendesignal auftreten.

Das erfindungsgemäße Verfahren eignet sich insbesondere für die Übertragung über einen Kanal, der ein induktives Kopplungselement bzw. einen Transformator, insbesondere einen kernlosen Übertrager (coreless transformer) aufweist.

Die erfindungsgemäße Sendevorrichtung umfasst eine Eingangsklemme zur Zuführung wenigstens eines Sendesignals und wenigstens eine an einen Übertragungskanal koppelbare Ausgangsklemme, wobei zwischen die Eingangsklemme und die Ausgangsklemme wenigstens eine einen Ansteuereingang aufweisende Impulserzeugungsschaltung geschaltet ist, die nach Maßgabe des Sendesignals eine wenigstens einen Impuls aufweisende Impulsfolge erzeugt. Zwischen die Ausgangsklemme der Sendevorrichtung und den Ansteuereingang der Impulserzeugungsschaltung ist eine Störsignaldetektionsschaltung geschaltet, die ein Ansteuersignal für die Impulserzeugungsschaltung bereitstellt, wobei die Impulserzeugungsschaltung die Impulsfolge nach Maßgabe des Ansteuersignals wiederholt erzeugt.

Bei einer Ausführungsform umfasst die Störsignaldetektionsschaltung der Sendevorrichtung eine an die Ausgangsklemme der Sendevorrichtung angeschlossene Detektorschaltung und eine der Detektorschaltung nachgeschaltete Ansteuersignalerzeugungsschaltung. Die an den Kanal angeschlossene Detektorschaltung überwacht den Kanal bezüglich des Auftretens von Störsignalen und stellt ein Ausgangssignal bereit, abhängig von dem die Ansteuersignalerzeugungsschaltung das Ansteuersignal bereitstellt.

Vorzugsweise erzeugt die Ansteuersignalerzeugungsschaltung das Ansteuersignal zudem abhängig von der wenigstens einen durch die Impulserzeugungsschaltung generierten und an den Kanal übertragenen Impulsfolge, um zu gewährleisten, dass während einer Zeitdauer, während der gerade eine Impulsfolge an den Kanal abgegeben wird kein Wiederholen der Impulsfolge gestartet wird.

Außerdem besteht die Möglichkeit, die Detektorschaltung während der Zeitdauer, während der eine Impulsfolge an den Kanal abgegeben wird, für die Störsignaldetektion zu blockieren, um zu verhindern das die aus dem Sendesignal resultierende zum ersten Mal oder wiederholten Mal übertragene Impulsfolge nicht fälschlicherweise als Störsignal detektiert wird. Anstelle der Detektorschaltung kann während der Übertragung eines Nutzimpulses auch die Ansteuersignalerzeugungsschaltung blockiert werden, um während der Übertragung eine Nutzimpulsfolge zu verhindern, dass die Nutzimpulsfolge selbst zum Anlass für eine wiederholte Übertragung genommen wird.

Eine Sendevorrichtung gemäß einer Ausführungsform der Erfindung umfasst eine erste an einen ersten Kanal koppelbare Ausgangsklemme und eine zweite an einen zweiten Kanal koppelbare Ausgangsklemme, wobei zwischen die Eingangsklemme und die erste Ausgangsklemme eine erste Impulserzeugungsschaltung und zwischen die Eingangsklemme und die zweite Ausgangsklemme eine zweite Impulserzeugungsschaltung geschaltet ist. Dabei ist zwischen die erste Ausgangsklemme und den Steuereingang der ersten Impulserzeugungsschaltung eine erste Störsignaldetektionsschaltung, die ein erstes Ansteuersignals bereitstellt, und zwischen die zweite Ausgangsklemme und den Steuereingang der zweiten Impulserzeugungsschaltung eine zweite Störsignaldetektionsschaltung, die ein zweites Ansteuersignal bereitstellt, geschaltet.

Bei dieser Sendevorrichtung, die zur Übertragung über zwei Kanäle geeignet ist, wird stets einer der beiden Kanäle bezüglich des Auftretens von Störsignalen überwacht wobei die erste Impulserzeugungsschaltung die erste Impulsfolge nach Maßgabe des ersten Ansteuersignals, also abhängig von der Detektion eines Störsignals auf dem ersten Kanal, und nach Maßgabe des zweiten Ansteuersignals, also abhängig von der Detektion eines Störsignals auf dem zweiten Kanal wiederholt bereitstellt und an den Kanal abgibt. Vorzugsweise stellt auch die zweite Impulserzeugungsschaltung die zweite Impulsfolge nach Maßgabe des zweiten Ansteuersignals und nach Maßgabe des ersten Ansteuersignals wiederholt bereit und gibt sie an den Kanal ab.

Außerdem ist bei einer Ausführungsform der erfindungsgemäßen Sendevorrichtung vorgesehen, dass die erste Störsignaldetektionsschaltung das erste Ansteuersignal nach Maßgabe eines zweiten Statussignals erzeugt, wobei dieses Statussignal anzeigt, ob gerade eine zweite Impulsfolge über den zweiten Kanal übertragen wird, so dass gewährleistet werden kann, dass die erste Impulsfolge erst dann wiederholt übertragen wird, wenn eine Signalübertragung auch auf dem zweiten Kanal beendet ist. Außerdem erzeugt die zweite Störsignaldetektionsschaltung das zweite Ansteuersignal nach Maßgabe eines ersten Statussignals, das anzeigt, ob gerade eine erste Impulsfolge an den ersten Kanal übertragen wird.

Bei einer Ausführungsform der erfindungsgemäßen Sendevorrichtung erzeugt die wenigstens eine Impulserzeugungsschaltung die Impulsfolge nach einer vorgegebenen Flanke des Eingangssignals und wiederholt die Impulsfolge vorzugsweise nach einer vorgegebenen Flanke des Ansteuersignals und bei einem vorgegebenen Pegel des Eingangssignals.

Die vorliegende Erfindung wird nachfolgend in Ausführungsbeispielen anhand von Figuren näher erläutert. In den Figuren zeigt
- Figur 1: Blockschaltbild eines Übertragungssystems zur Datenübertragung über einen Kanal, der eine Potentialbarriere enthält,
- Figur 2: beispielhafte Signalverläufe eines Sendesignals (Sin), einer Impulsfolge (PS) und eines an einem ersten Kanal detektierten Signals (KS) bei einer ersten Ausführungsform eines erfindungsgemäßen Verfahrens,
- Figur 3: beispielhafte Signalverläufe eines Sendesignals (Sin), einer über einen Kanal zu übertragenden Impulsfolge (PS1) und eines an dem Kanal detektierten Signals (KS) bei einer weiteren Ausführungsform des erfindungsgemäßen Verfahrens,
- Figur 4: Blockschaltbild eines Übertragungssystems zur Datenübertragung über einen ersten und zweiten Kanal, die jeweils eine Potentialbarriere enthalten,
- Figur 5: beispielhafte Signalverläufe eines Sendesignals (Sin), einer ersten über einen ersten Kanal zu übertragenden Impulsfolge (PS1), einer zweiten über einen zweiten Kanal zu übertragenden Impulsfolge (PS2), eines an dem ersten Kanal detektierten Signals (KS1) und eines an dem zweiten Kanal detektierten Signals (KS2) bei einer zweiten Ausführungsform des erfindungsgemäßen Verfahrens,
- Figur 6: eine erfindungsgemäße Sendevorrichtung zur Durchführung eines Verfahrens gemäß Figur 2,
- Figur 7: beispielhafte zeitliche Verläufe einiger der in der Sendevorrichtung nach Figur 6 auftretender Signale,
- Figur 8: eine erste Impulserzeugungsschaltung und eine erste Störsignaldetektionsschaltung einer Sendevorrichtung zur Durchführung eines Verfahrens nach Figur 5,
- Figur 9: eine zweite Impulserzeugungsschaltung und eine zweite Störsignaldetektionsschaltung einer Sendevorrichtung zur Durchführung eines Verfahrens nach Figur 5,
- Figur 10: ein Ausführungsbeispiel eines in den Figuren 8 und 9 dargestellten Monoflops,
- Figur 11: beispielhafte zeitliche Verläufe einiger der in der Impulserzeugungsschaltung und der Störsignaldetektionsschaltung nach Figur 8 auftretenden Signale,
- Figur 12: ein weiteres Ausführungsbeispiel einer Sendevorrichtung,
- Figur 13: ein Ausführungsbeispiel einer Empfängervorrichtung.

In den Figuren bezeichnen, sofern nicht anders angegeben, gleiche Bezugszeichen gleiche Teile mit gleicher Bedeutung.

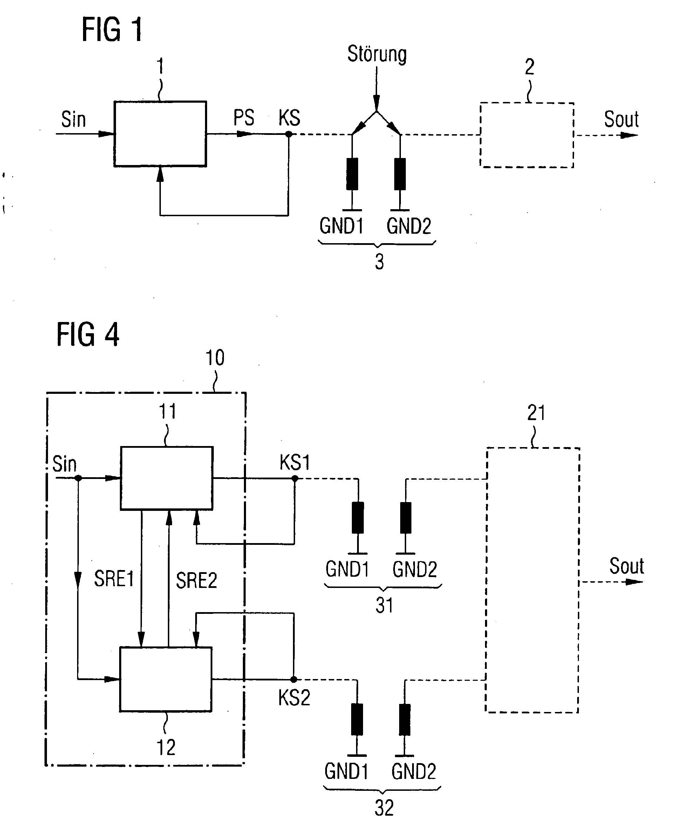

Zum besseren Verständnis des erfindungsgemäßen Verfahrens und der erfindungsgemäßen Sendevorrichtung zeigt Figur 1 ein Übertragungssystem zum Übertragen eines Sendesignals Sin über einen Kanal, der in dem Ausführungsbeispiel einen Übertrager 3 aufweist. Der Übertrager umfasst in dem Ausführungsbeispiel zwei induktiv gekoppelte Spulen bzw. Wicklungen, die an unterschiedliche Bezugspotentiale GND1, GND2 angeschlossen sind. Das Übertragungssystem umfasst eine Sendevorrichtung 1, der das Sendesignal Sin zugeführt ist und die ein Signal, insbesondere eine Impulsfolge PS an den Kanal abgibt. Auf der Empfängerseite des Kanals ist ein Empfänger 2 vorhanden, der aus einem über den Kanal empfangenen Signal ein Ausgangssignal Sout erzeugt, welches bei einem störungsfreien Kanal mit dem Sendesignal Sin übereinstimmt.

An dem senderseitigen Abschnitt des Kanals ist ein an dem Kanal anliegendes Signal KS detektierbar, wobei dieses Signal KS sowohl von einer von dem Sendesignal Sin abhängigen Impulsfolge oder auch aus einem von extern in den Kanal eingekoppelten Störsignal abhängig sein kann. Dieses an dem Kanal anliegende Signal KS ist an die Sendevorrichtung K1 rückgekoppelt, um Störsignale auf dem Kanal detektieren zu können, wie nachfolgend noch erläutert wird.

Ein erstes Ausführungsbeispiel eines erfindungsgemäßen Verfahrens zur Übertragung eines Sendesignals Sin über einen Kanal wird nachfolgend anhand beispielhafter zeitlicher Verläufe eines Sendesignals Sin, einer von der Sendevorrichtung 10 abhängig von dem Sendesignal Sin erzeugten und an den Kanal abgegebenen Impulsfolge PS und eines an den Kanal detektierbaren Kanalsignals KS nachfolgend erläutert.

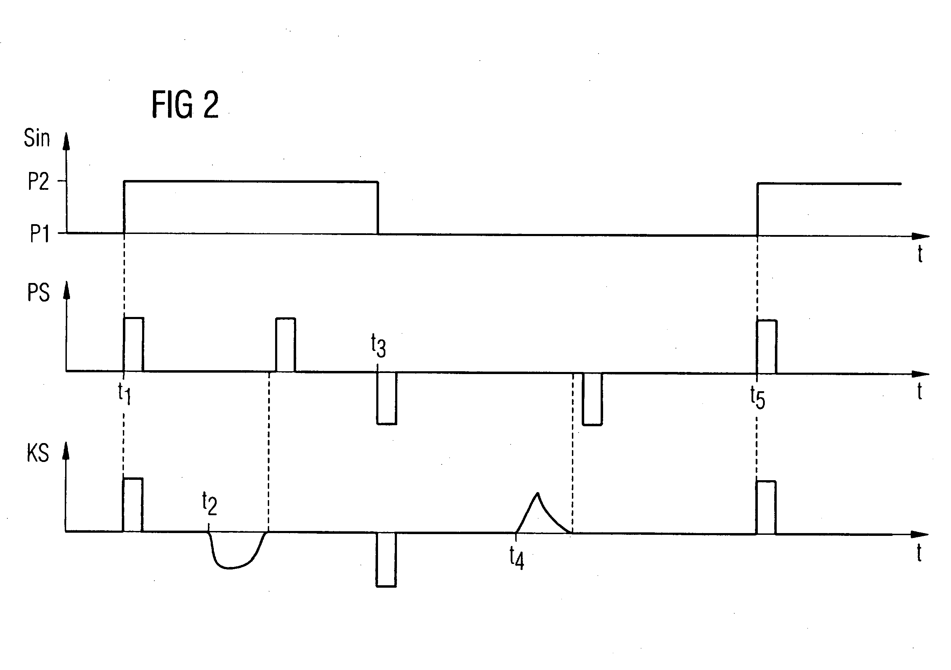

Das in Figur 2 dargestellte Sendesignal Sin ist ein zweiwertiges Sendesignal, das abwechselnd einen ersten Signalspegel P1 und einen zweiten Signalpegel P2 annimmt. Dieses über den Kanal zu übertragene Sendesignal ist beispielsweise ein Steuersignal für einen empfängerseitig angeordneten, nicht näher dargestellten Verbraucher und dient beispielsweise zum Ein- oder Ausschalten dieses Verbrauchers.

Abhängig von diesem zweiwertigen Sendesignal Sin wird bei dem in Figur 2 dargestellten erfindungsgemäßen Verfahren eine Impulsfolge erzeugt, die einen positiven Impuls aufweist, wenn der Signalpegel des Sendesignals Sin von dem ersten Pegel P1 auf den zweiten Pegel P2 ansteigt, wenn also eine steigende Flanke dieses Sendesignals Sin vorliegt, wie dies zu den Zeitpunkten t1 und t5 in Figur 2 der Fall ist. Mit jeder steigenden Flanke des Sendesignals Sin wird also eine einen positiven Impuls umfassende Impulsfolge generiert. Diese in der Sendevorrichtung gemäß Figur 1 erzeugten Impulse rufen an dem Kanal einen entsprechenden detektierbaren Signalimpuls hervor, wobei dieser an dem Kanal zu detektierende Signalimpuls RS anhängig von den Kanaleigenschaften gegebenenfalls gegenüber dem Impuls der Impulsfolge PS verzögert oder abgeflacht erscheint, wobei dies in der Darstellung gemäß Figur 2 allerdings nicht berücksichtigt ist.

Zum Zeitpunkt t2 tritt in dem Signalverlauf gemäß Figur 2 ein Störimpuls, in dem Beispiel ein negativer Störimpuls, an dem Kanal auf. Dieser Störimpuls wird detektiert und nach Abklingen des Störimpulses wird der zum Zeitpunkt t1 gesendete Impuls wiederholt. Eine empfängerseitige Fehlinformation wird dadurch korrigiert. Der Empfänger kann nämlich nicht unterscheiden, ob ein Impuls auf dem Kanal aus einem durch die Sendevorrichtung abgegebenen Signal resultiert oder aus einem Störimpuls. Ist der Empfänger so ausgebildet, dass bei Empfang eines negativen Impulses über den Kanal ein Verbraucher in einem bestimmten Betriebszustand gebracht wird, so könnte der zum Zeitpunkt t2 auftretende negative Störimpuls diese Ansteuerung des Verbrauchers bewirken. Der nach dem Abklingen des Störimpulses wiederholte, von dem Sendesignal Sin abhängige korrekte Impuls sorgt dafür, dass der Verbraucher wieder in den richtigen Betriebszustand gebracht wird, sofern aufgrund des Störimpulses ein falscher Zustandsübergang stattgefunden hat. Der positive Impuls wird unmittelbar nach Abklingen des Störimpulses oder geringfügig zeitlich verzögert nach Abklingen des Störimpulses wiederholt übertragen.

Bei dem Ausführungsbeispiel gemäß Figur 2 wird ein negativer Impuls übertragen, wenn der Pegel des Sendesignals Sin von dem zweiten Pegel P2 auf den ersten Pegel absinkt, also bei jeder fallenden Flanke des Sendesignals Sin, wie dies zum Zeitpunkt t3 dargestellt ist. In entsprechender Weise wird dieser negative Impuls nach dem Abklingen eines zum Zeitpunkt t4 beginnenden Störimpulses bzw. Störsignals wiederholt übertragen, um eine durch das Störsignal bedingte Fehlansteuerung des Verbrauchers zu vermeiden bzw. zu korrigieren.

Bei dem in Figur 2 veranschaulichten Übertragungsverfahren wird lediglich ein Übertragungskanal für die Datenübertragung verwendet, wobei über diesen Kanal mit jeder steigenden Flanke des Sendesignals Sin ein positiver Impuls und mit jeder fallenden Flanke des Sendesignals Sin ein negativer Impuls übertragen wird, und wobei der positive Impuls nach Detektion eines Störimpulses auf dem Kanal wiederholt wird, solange das Sendesignal Sin nach einer steigenden Flanke seinen Pegel beibehält, und wobei der negative Impuls nach einer Detektion eines Störimpulses auf dem Kanal wiederholt wird, solange das Sendesignal Sin nach einer fallenden Flanke seinen Pegel beibehält. Wechselt das Sendesignal während einer Störung seinen Zustand, so wird nach dem Abklingen der Störung ein Impuls bzw. ein Korrekturimpuls übertragen, der dem neuen Pegel des Sendesignal zugeordnet ist.

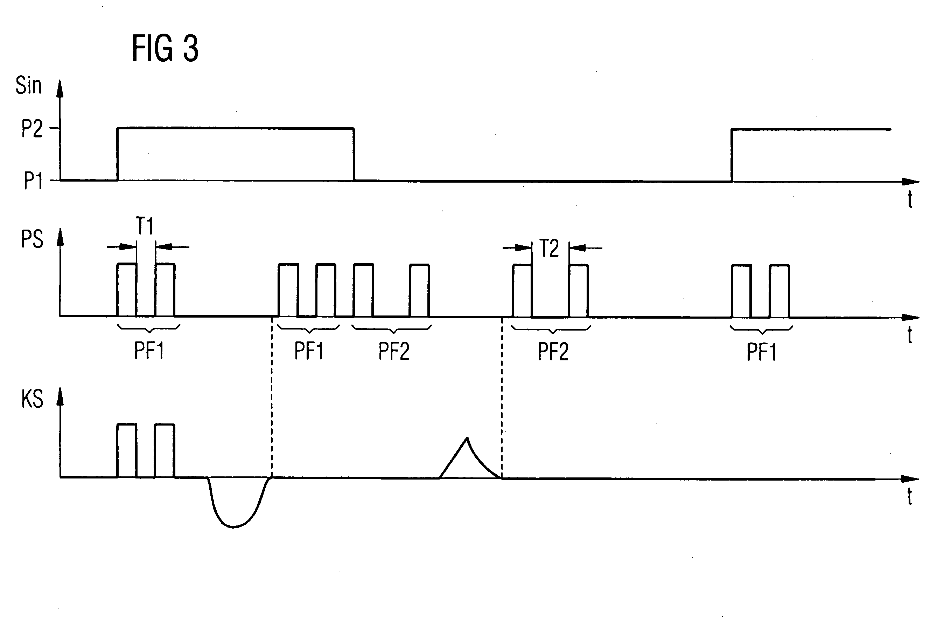

Figur 3 veranschaulicht ein erfindungsgemäßes Verfahren, bei dem das Sendesignal Sin pulscodemoduliert übertragen wird, wobei eine steigende Flanke des Sendesignals Sin in eine erste Impulsfolge PF1 mit zwei Impulsen umgesetzt wird, bei welcher der zeitliche Abstand dieser beiden Impulse beispielhaft T1 beträgt. Eine fallende Flanken des Sendesignals Sin wird in eine zweite Impulsfolge PF2 umgesetzt, wobei der zeitliche Abstand dieser Impulse beispielhaft T2 beträgt.

Die zeitliche Dauer der Impulsfolgen PF1, PF2 ist üblicherweise geringer als die Zeitdauer, für welche das Sendesignal Sin zeitlich zusammenhängend den zweiten Signalpegel P2 oder den ersten Singalpegel P1 annimmt. Bei dem Verfahren gemäß Figur 3 wird nach einer Detektion eines Störimpulses die erste Impulsfolge PF1 wiederholt, sofern das Sendesignal Sin sich nach wie vor auf dem zweiten Signalpegel P2 befindet.

Entsprechend wird die zweite Impulsfolge PF2 wiederholt, nachdem ein Störimpuls auf den Kanal detektiert wurde, sofern das Sendesignal Sin den ersten Signalpegel P1 aufweist. Hat das Sendesignal Sin zwischenzeitlich - während des Auftretens eines Störsignals - seinen Pegel gewechselt, so wird nach dem Abklingen der Störung eine Signalfolge übertragen, die dem aktuellen Pegel bzw. Zustand des Sendesignals Sin zugeordnet ist.

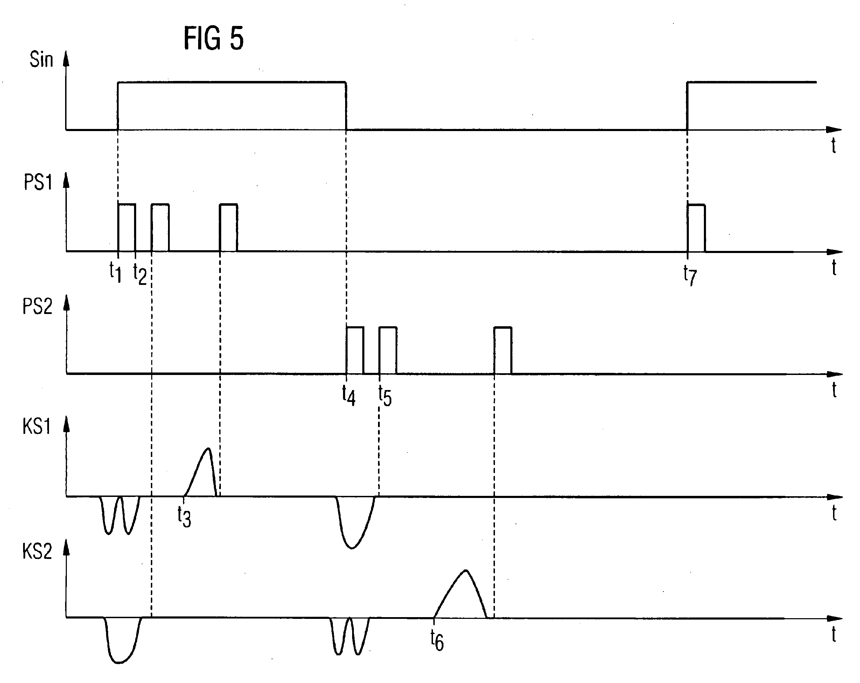

Figur 4 veranschaulicht zum besseren Verständnis einer weiteren Ausführungsform eines erfindungsgemäßen Verfahrens und erfindungsgemäßen Sendevorrichtung ein Datenübertragungssystem zur Übertragung des Sendesignals Sin über zwei separate Kanäle, wobei jeder der Kanäle einen Transformator 31, 32 als Potentialbarriere aufweist. Empfängerseitig ist an beide Kanäle eine Empfängerschaltung 21 angeschlossen, die ein Ausgangssignal Sout abhängig von an den Kanälen anliegenden Signalen bereitstellt, wobei die Empfängerschaltung 21 und eine senderseitig angeordnete Sendevorrichtung 10 so aufeinander abgestimmt sind, dass das Ausgangssignal Sout mit dem Sendesignal Sin übereinstimmt, sofern der Kanal störungsfrei ist. Der Sendevorrichtung 10 ist das Sendesignal Sin zugeführt, wobei die Sendevorrichtung eine erste Sendevorrichtung 11 umfasst, die eine erste Impulsfolge PS1 abhängig vom Sendesignal Sin erzeugt und an den ersten Kanal ausgibt und wobei die Sendevorrichtung 10 eine zweite Sendevorrichtung 12 aufweist, die abhängig von dem Sendesignal Sin eine zweite Impulsfolge PS2 erzeugt und an den zweiten Kanal ausgibt.

Die erste Sendevorrichtung 11 überwacht zudem den ersten Kanal, wozu der ersten Sendevorrichtung 11 ein an dem ersten Kanal detektierbares Signal KS1 zugeführt ist. Die zweite Sendevorrichtung überwacht den zweiten Kanal, wobei der zweiten Sendevorrichtung 12 ein an dem Kanal detektierbares Kanalsignal KS2 zugeführt ist. Vorzugsweise sind die erste und die zweite Sendevorrichtung miteinander gekoppelt, wie dies in Figur 4 dargestellt ist. Dadurch wird ermöglicht, dass bei einer Detektion eines Störimpulses auf dem ersten Kanal abhängig von einem durch die erste Sendevorrichtung 11 erzeugten ersten Wiederauffrischungssignal bzw. Ansteuersignal SRE1, die durch die zweite Sendevorrichtung 12 bereitgestellte Impulsfolge wiederholt übertragen wird, und dass abhängig von einem durch die zweite Signalerzeugungsvorrichtung 12 bereitgestellten zweiten Wiederauffrischungssignal bzw. Ansteuersignal SRE2, das von der Detektion eines Störimpulses auf dem zweiten Kanal abhängig ist, die durch die erste Sendevorrichtung 11 bereitgestellte erste Impulsfolge wiederholt an den ersten Kanal übertragen wird. Die durch die erste und zweite Sendevorrichtung 11, 12 erzeugten Impulsfolgen PS1, PS2 werden vorzugsweise zeitlich gegeneinander versetzt übertragen.

Während eine aus dem Sendesignal Sin resultierende Impulsfolge über einen der Kanäle übertragen wird, ist dieser Kanal für die Detektion eines Störimpulses gesperrt, um zu verhindern, dass fälschlicherweise ein Nutzsignalimpuls als Störimpuls detektiert wird. Da die erste und zweite Impulsfolge PS1, PS2 zeitlich versetzt zueinander erzeugt und übertragen werden, steht allerdings immer einer der beiden Kanäle zur Störsignaldetektion zur Verfügung, wobei man sich die Erkenntnis zu Nutzen macht, das Störsignale üblicherweise beide Kanäle gleichzeitig beeinflussen.

Figur 5 veranschaulicht ein erfindungsgemäßes Signalübertragungsverfahren unter Verwendung zweier Übertragungskanäle, wobei in Figur 5 untereinander beispielhafte zeitliche Verläufe des Sendesignals Sin, der ersten Impulsfolge PS1, der zweiten Impulsfolge PS2, eines an dem ersten Kanal anliegenden Signals KS1 und eines an dem zweiten Kanal anliegenden Signals KS2 dargestellt sind.

Bei dem Verfahren gemäß Figur 5 wird mit jeder steigenden Flanke des zweiwertigen Sendesignals Sin ein Impuls durch die erste Sendevorrichtung 11 erzeugt und an den ersten Kanal ausgegeben, wie dies zu den Zeitpunkten t1 und t7 dargestellt ist. Dieser Sendeimpuls wird wiederholt über den zugehörigen Kanal übertragen, nachdem ein Störsignal an einem der beiden Kanäle detektiert wurde. Bei dem in Figur 5 dargestellten zeitlichen Verlauf tritt mit der Übertragung des Impulses an dem ersten Kanal ein Störimpuls auf, der in dem Beispiel negativ gegenüber dem ausgesendeten Impuls ist. Dieser Störimpuls verfälscht das über den ersten Kanal gesendete Signal, wie dies anhand des Verlaufes des Signals KS1 dargestellt ist. Die Form des Störimpulses wird anhand des zeitlichen Verlaufes des Signals KS2 deutlich. Bei dem erfindungsgemäßen Verfahren findet während der Zeitdauer, während der ein Impuls über einen der beiden Kanäle übertragen wird, an diesem Kanal keine Störsignaldetektion statt.

Bei dem Beispiel gemäß Figur 5 wird mit jeder fallenden Flanke des Sendesignals Sin ein Impuls über den zweiten Kanal übertragen, wie dies zum Zeitpunkt t4 in Figur 5 dargestellt ist. Impulse über den ersten Kanal und den zweiten Kanal werden damit zeitlich zueinander versetzt übertragen, so dass während einer Übertragung von Impulsen über den ersten Kanal der zweite Kanal zur Störsignaldetektion dient. Entsprechend wird nach der Detektion eines Störimpulses in dem Signal KS2, das an dem zweiten Kanal abgegriffen wird, der nach der steigenden Flanke zum Zeitpunkt t1 erzeugte Impuls nach dem Abklingen des Störimpulses zum Zeitpunkt t2 wiederholt. Obwohl während des Aussendens des ersten Impulses ein Störimpuls auf beiden Kanälen aufgetreten ist, der zu einer nicht richtigen Übertragung des ersten Impulses geführt hat, wird dieser Fehler dank des zweiten Kanals, der während des Aussendens eines Impulses über den ersten Kanal ausschließlich zur Störsignaldetektion dient, korrigiert.

Nach der Übertragung eines Impulses dient auch der erste Kanal zur Störsignaldetektion, so dass der über den ersten Kanal ausgesendete Impuls auch dann wiederholt wird, wenn ein Störsignal ausschließlich auf dem ersten Kanal detektiert wird, wie dies ab dem Zeitpunkt t3 dargestellt ist. Nach dem Abklingen des Störimpulses wird der aus der positiven Flanke des Sendesignals Sin resultierende Impuls wiederholt übertragen.

Entsprechend dient während der Übertragung eines von dem Sendesignals Sin abhängigen Impulses bzw. einer Impulsfolge über den zweiten Kanal der erste Kanal ausschließlich der Störsignaldetektion, so dass der über den zweiten Kanal gesendete Impuls auch dann wiederholt übertragen wird, wenn während des Aussendens des Impulses ein Störsignal den zweiten Kanal erheblich stört. Hierbei wird davon ausgegangen, dass Störimpulse üblicherweise die beiden Kanäle gleichzeitig betreffen. Nach dem Aussenden eines Impulses bzw. einer Impulsfolge über den zweiten Kanal dient auch der zweite Kanal zur Störsignaldetektion, so dass der über den zweiten Kanal übertragene Impuls auch dann wiederholt wird, wenn ein Störsignal nur an dem zweiten Kanal detektiert wird. In Figur 5 beginnt ein solcher Störimpuls beispielhaft zum Zeitpunkt t6. Der aus der fallenden Flanke des Sendesignals Sin resultierende Impuls wird dabei nach dem Abklingen dieses Störimpulses wiederholt übertragen.

Selbstverständlich sind im Zusammenhang mit der Ausführungsform des erfindungsgemäßen Verfahrens, bei der Impulsfolgen über zwei voneinander getrennte Kanäle übertragen werden, beliebige von dem Sendesignal Sin abhängige Impulsfolgen einsetzbar, die nach der Detektion eines Störsignals bzw. Störimpulses an wenigstens einem der beiden Kanäle über den zugehörigen Kanal wiederholt übertragen werden.

Bei einer Abwandlung des in Figur 5 dargestellten Verfahrens ist vorgesehen, den nach einem Pegelwechsel des Sendesignals Sin ersten erzeugten Impuls bzw. die erste erzeugte Impulsfolge zu verzögern, wenn zusammen mit diesem Pegelwechsel ein Störsignal bzw. ein Störimpuls auf einem der beiden Kanäle detektiert wird, und den ersten Impuls bzw. die erste Impulsfolge erst nach dem Abklingen dieses Störsignals zu übertragen.

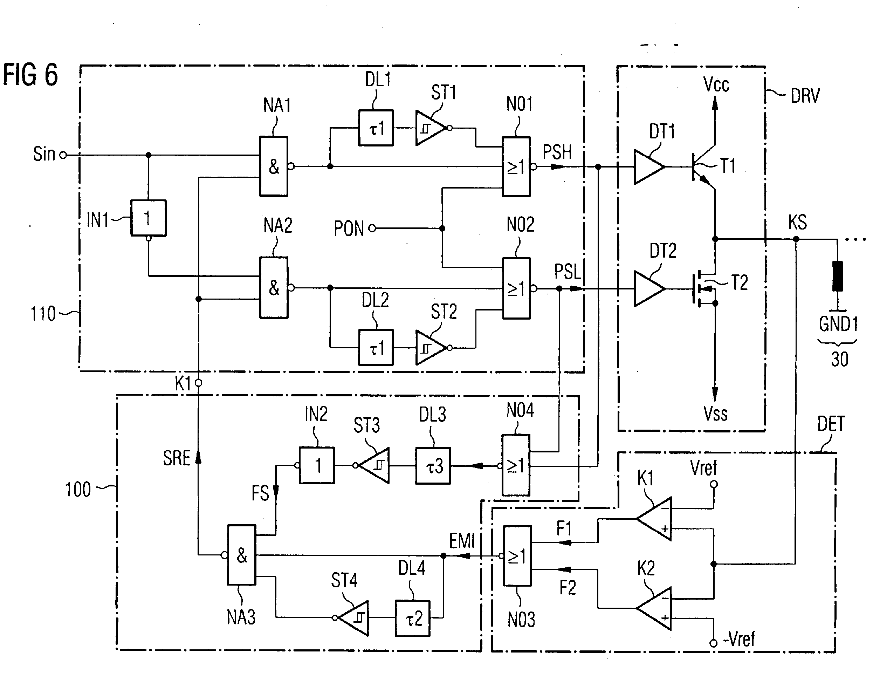

Figur 6 zeigt im Detail ein Ausführungsbeispiel einer erfindungsgemäßen Sendevorrichtung gemäß Figur 1 zur Durchführung eines Verfahrens gemäß Figur 2 auf der Senderseite.

Die Sendevorrichtung umfasst eine Eingangsklemme zur Zuführung des Sendesignals Sin und ist mittels einer Ausgangsklemme an den Kanal gekoppelt, wobei in Figur 6 aus Gründen der Übersichtlichkeit lediglich eine der Wicklungen des Übertragers des Kanals dargestellt ist.

Die Sendevorrichtung umfasst eine Treiberschaltung DRV mit zwei Transistoren T1, T2, deren Laststrecken in Reihe zwischen ein positives Versorgungspotential Vcc und ein negatives Versorgungspotential Vss geschaltet sind, wobei ein den beiden Transistoren gemeinsamer Knoten an den Kanal angeschlossen ist. Das Potential an dem Kanal kann mittels dieser Treiberschaltung DRV auf positives Potential oder negatives Potential gezogen werden, wobei das Potential an dem Kanal positiv ist, wenn der an das positive Versorgungspotential Vcc angeschlossene erste Transistor T1 leitet und der an das negative Versorgungspotential Vss angeschlossene zweite Transistor T2 sperrt. Entsprechend wird das Potential an dem Kanal negativ, wenn der zweite Transistor leitet und der erste Transistor T2 sperrt. Der erste Transistor T1 ist in dem Ausführungsbeispiel als Bipolartransistor ausgebildet, während der zweite Transistor T2 ein MOSFET ist. Zur Bereitstellung von Ansteuersignalen für die beiden Transistoren T1, T2 ist eine Impulserzeugungsschaltung 110 vorhanden, die eine erste Impulsfolge PSH zur Ansteuerung des ersten Transistors T1 und eine zweite Impulsfolge PSL zur Ansteuerung des zweiten Transistors T2 bereitstellt. Zur Umsetzung der Logikpegel dieser beiden Impulsfolgen PSH, PSL auf geeignete Potentiale zur Ansteuerung der beiden Transistoren T1, T2 sind diese Impulsfolgen Treiberschaltungen DT1 bzw. DT2 zugeführt, wobei die Treiberschaltung DT1 an den Steueranschluss des ersten Transistors T1 und die Treiberschaltung DT2 an den Steueranschluss des zweiten Transistors T2 angeschlossen ist.

Zur Bereitstellung der Impulsfolgen PSH, PSL umfasst die Impulserzeugungsschaltung 110 eine Anzahl von Logikbauelementen, die nachfolgend erläutert werden.

Die Impulsfolge PSH zur Ansteuerung des ersten Transistors T1 steht am Ausgang eines ersten NOR-Gatters NO1 zur Verfügung und die Impulsfolge PSL zur Ansteuerung des zweiten Transistor T2 steht an einem zweiten NOR-Gatter NO2 zur Verfügung. Dem ersten NOR-Gatter NO1 ist ein Ausgangssignal eines vorgeschalteten NAND-Gatters NA1, das mittels eines Verzögerungsgliedes DL1 verzögerte und mittels eines Schmitt-Triggers ST1 invertierte Ausgangssignal des ersten NAND-Gatters NA1 und ein Einschaltsignal PON zugeführt. Entsprechend ist dem zweiten NOR-Gatter NO2 das Ausgangssignal eines zweiten NAND-Gatters NA2, das mittels eines Verzögerungsgliedes DL2 verzögerte und mittels eines Schmitt-Triggers invertierte Ausgangssignal dessen NAND-Gatters NA2 und das Einschaltsignal PON zugeführt.

Dem ersten NAND-Gatter NA1 ist das Sendesignal Sin sowie ein Ansteuersignal bzw. Wiederauffrischungssignal SRE zugeführt. Dieses Ansteuersignal SRE weist üblicherweise den Pegel einer logischen 1 auf, sofern kein Störimpuls an dem Kanal detektiert wird, wie nachfolgend noch erläutert werden wird. Dem zweiten NAND-Gatter NA2 ist das mittels eines Inverters IN1 invertierte Sendesignal Sin sowie ebenfalls das Ansteuersignal SRE zugeführt.

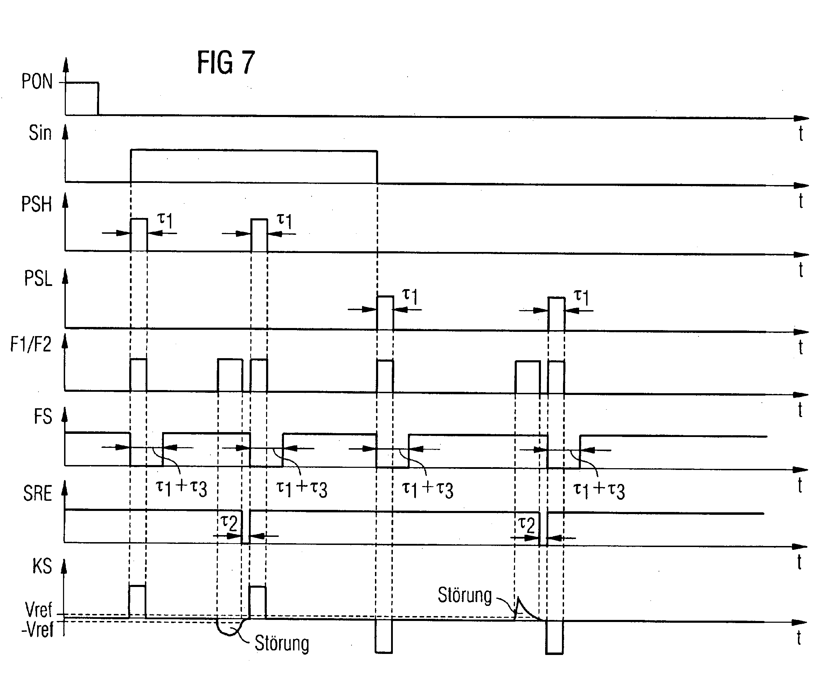

Die Funktionsweise dieser Impulserzeugungsschaltung 110 wird nachfolgend kurz erläutert, wobei bezüglich des zeitlichen Verlaufs der Impulsfolgen PSH, PSL auf Figur 7 verwiesen wird, in der im oberen Teil untereinander das Einschaltsignal PON, das Sendesignal Sin, die Impulsfolge PSH und die Impulsfolge PSL dargestellt sind.

Es sei zunächst angenommen, dass das Ansteuersignal SRE den Pegel einer logischen 1 aufweist und dass zudem das Einschaltsignal PON, welches low-aktiv ist, den Pegel einer logischen 0 aufweist. Nimmt das Einschaltsignal Sin ebenfalls den Pegel einer logischen 0 bzw. den unteren Signalpegel P1 an, so liegt am Ausgang des NAND-Gatters NA1 der Pegel einer logischen 1 an, was zusammen mit dem Pegel des Einschaltsignals PON über das NOR-Gatter NO1 den Pegel einer logischen 0 an dem Ausgang des NOR-Gatters NO1 ergibt. An dem Ausgang des zweiten NOR-Gatters NO2 liegt ebenfalls der Pegel einer logischen 0 an, wenn das Eingangssignal Sin den Pegel einer logischen 0 aufweist. In diesem Fall liegt am Ausgang des NAND-Gatters NA2 der Pegel einer logischen 0 an. Das Verzögerungsglied DL2 ist dazu ausgebildet, Pegelwechsel von einer logischen 0 zu einer logischen 1 verzögerungslos und Pegelwechsel von einer logischen 1 zu einer logischen 0 mit einer Verzögerungszeit T1 weiterzugeben. Unter der Annahme, dass der Low-Pegel am Ausgang des NAND-Gatters NA2 bereits länger als diese Verzögerungszeit T1 anliegt, liegt am Ausgang des invertierenden Schmitt-Triggers ST2 ein High-Pegel an, so dass am Ausgang des NOR-Gatters NO2 ein Low-Pegel anliegt.

Wechselt das Eingangssignal Sin von dem Low-Pegel (logische 0) zu dem High-Pegel (logische 1), so wechselt der Pegel am Ausgang des ersten NAND-Gatters NA1 von einer logischen 1 auf eine logische 0. Das Verzögerungsglied DL1 ist entsprechend dem Verzögerungsglied DL2 so ausgebildet, dass es Pegelwechsel von der logischen 1 zur logischen 0 mit einer Verzögerungszeit τ1 und Pegelwechsel von der logischen 0 zu der logischen 1 verzögerungslos weitergibt. Am Ausgang des invertierenden Schmitt-Triggers ST1 liegt somit nach dem Wechsel des Pegels des Ausgangssignals des NAND-Gatters NA1 noch für eine Zeitdauer τ1 ein Low-Pegel an, so dass am Ausgang des NOR-Gatters NO1 nach einem Wechsel des Pegels des Sendesignals Sin von low nach high für eine Zeitdauer τ1 ein Impuls an, wie dies in Figur 7 mit der steigenden Flanke des Sendesignals Sin dargestellt ist. Entsprechend liegt am Ausgang des NOR-Gatters NO2 nach einer fallenden Flanke des Sendesignals Sin für eine Zeitdauer τ2 ein Impuls der Zeitdauer τ1 an.

Der erste Transistor T1 wird über den Impuls der Impulsfolge PSH mit jeder steigenden Flanke des Sendesignals Sin leitend, um den Kanal auf positives Potential zu ziehen, wie dies anhand des am Kanal abgreifbaren Kanalsignals KS, dessen zeitlicher Verlauf in Figur 7 unten dargestellt ist, deutlich wird. Sperrt der erste Transistor T1 anschließend ist der Ausgang der Treiberschaltung DRV hochohmig. Die Treiberschaltung DRV ist eine sogenannte Tristate-Treiberschaltung, die drei Zustände annehmen kann, einen ersten Zustand, bei dem der erste Transistor T1 leitet und der zweite Transistor T2 sperrt, so dass am Ausgang der Treiberschaltung DRV positives Versorgungspotential Vcc anliegt, einen zweiten Zustand, bei dem der zweite Transistor T2 leitet und der erste Transistor T1 sperrt, so dass am Ausgang der Treiberschaltung DRV negatives Potential Vss anliegt, und einen dritten Zustand, bei dem beide Transistoren T1, T2 sperren, so dass der Ausgang der Treiberschaltung DRV hochohmig ist.

Bei einem Impuls des Signals PSL wird der zweite Transistor T2 leitend angesteuert, wodurch der Kanal auf negatives Potential gezogen wird, wie dies ebenfalls anhand des am Kanal abgreifbaren Kanalsignals KS deutlich wird.

Allgemein erzeugt der erste Zweig der Impulserzeugungsschaltung 110 mit dem ersten NAND-Gatter NA1, dem Verzögerungsglied DL1 und dem Schmitt-Trigger ST1, sowie dem NOR-Gatter NO1 einen Impuls der Zeitdauer T1, wenn eines der beiden Eingangsignale des NAND-Gatters NA1 vom Pegel einer logischen 0 auf den Pegel einer logischen 1 ansteigt, während das andere der beiden Eingangssignale den Pegel einer logischen 1 beibehält. In entsprechender Weise erzeugt der zweite Zweig der Impulserzeugungsschaltung 110 mit dem zweiten NAND-Gatter NA2, dem Verzögerungsglied DL2, dem Schmitt-Trigger ST2 und dem NOR-Gatter NO1 einen Impuls der Zeitdauer τ1, wenn eines der beiden Eingangssignale des NAND-Gatters NA2 von dem Pegel einer logischen 0 auf den Pegel einer logischen 1 wechselt, während das andere der beiden Eingangssignale den Pegel einer logischen 1 beibehält. Der erste Zweig der Impulserzeugungsschaltung 110 erzeugt somit auch dann einen Impuls der Zeitdauer τ1, wenn das Eingangssignal Sin den Pegel einer logischen 1 annimmt und das Wiederauffrischungssignal SRE von einem Low-Pegel auf einen High-Pegel ansteigt. Entsprechend erzeugt der zweite Zweig einen Impuls der Zeitdauer τ1 zur Ansteuerung des zweiten Transistors T2, wenn das Eingangssignal Sin den Wert einer logischen 0 annimmt und das Wiederauffrischungssignal SRE vom wert einer logischen 0 auf den Wert einer logischen 1 ansteigt.

Dieses Wiederauffrischungssignal bzw. Ansteuersignal wird durch eine Ansteuersignalerzeugungsschaltung 100 nach Maßgabe eines von einer Detektorschaltung DET bereitgestellten Störsignal-Detektionssignals erzeugt, wobei das Wiederauffrischungssignal SRE nach Detektion eines Störsignals für eine Zeitdauer τ2 auf einen Low-Pegel absinkt, um dann auf einen High-Pegel anzusteigen und die erneute Erzeugung eines Impulses durch die Impulserzeugungsschaltung 110 zu veranlassen, wie im Folgenden erläutert wird.

Die Detektorschaltung DET ist an den Kanal gekoppelt und weist eine Vergleicheranordnung mit einem ersten Komparator K1 und einem zweiten Komparator K2 auf, die dazu dient, das Kanalsignal mit einem positiven Referenzwert Vref und einem negativen Referenzwert -Vref zu vergleichen. Ausgangssignale F1, F2 dieser Komparatoren K1, K2 sind einem NOR-Gatter NO3 zugeführt, wobei diese beiden Ausgangssignale F1, F2 den Wert einer logischen 0 annehmen, solange das Kanalsignal K1 innerhalb eines durch die Referenzwerte -Vref und Vref vorgegebenen Intervalls liegt. Das Störsignal-Detektionssignal EMI liegt dann entsprechend auf dem Wert des Pegels einer logischen 1. Übersteigt das Kanalsignal KS betragsmäßig einen dieser beiden Referenzwerte, so ist eines der Komparator-Ausgangssignale F1 bzw. F2 high, während das andere low ist, so dass das Störsignal-Detektionssignal EMI den Wert einer logischen 0 annimmt, wie dies ebenfalls in Figur 7 veranschaulicht ist, wobei hier die Komparator-Ausgangssignale F1, F2 gemeinsam in einem zeitlichen Diagramm dargestellt sind.

In der Detektorschaltung DET kann in dem Beispiel nicht unterschieden werden, ob das Ansteigen oder Absinken des Kanalsignals KS auf einen außerhalb des Interwalls liegenden Wert durch ein Störsignal oder einen durch die Impulse PSH, PSL leitend angesteuerten Transistoren T1, T2 hervorgerufen wird, so dass das Störsignaldetektionssignal EMI auch bei einem Nutzsignal-Impuls den Wert eines logischen Low-Pegels annimmt. Um zu verhindern, dass ein derartiger Nutzimpuls als Störsignal detektiert wird, erfolgt die Erzeugung des Ansteuersignals SRE in der Ansteuersignalerzeugungsschaltung abhängig von einem Freigabesignal FS, welches von den Impulsfolgen PSH, PSL abhängig ist. Dieses Freigabesignal FS ist einem NAND-Gatter NA3 zugeführt, an dessen Ausgang das Ansteuersignal SRE anliegt. Dem NAND-Gatter NA3 ist weiterhin das Störsignaldetektionssignal EMI direkt und das mittels eines Verzögerungsgliedes DL4 verzögerte und mittels eines Schmitt-Triggers ST4 invertierte Störsignaldetektionssignal EMI zugeführt. Das Verzögerungsglied DL4 ist so ausgebildet, dass es Pegelwechsel des Störsignal-Detektionssignals EMI von einem Low-Pegel auf einen High-Pegel mit einer Verzögerungszeit τ2 verzögert weitergibt, während Pegelwechsel von einem High-Pegel auf einen Low-Pegel unverzögert weitergegeben werden. Wechselt der Pegel des Störsignal-Detektionssignals EMI somit nach Abklingen eines Störsignals bzw. auch Nutzsignals von einem Low-Pegel auf einen High-Pegel, so wird dieser Pegelwechsel nur verzögert weitergegeben, so dass sich das Störsignal-Detektionssignal EMI und das am Ausgang des Schmitt-Triggers SD4 anliegende Signal für eine Zeitdauer τ2 nach diesem Pegelwechsel nicht unterscheiden, wobei beide den Wert einer logischen 1 annehmen.

Besitzt auch das Freigabesignal FS während dieser Zeitdauer den Wert einer logischen 1, so sinkt das Ansteuersignal SRE für diese Zeitdauer τ2 auf den Pegel der logischen 0 ab, um mit dem nachfolgenden Ansteigen auf eine logische 1 die Erzeugung eines Wiederauffrischungsimpulses der Zeitdauer τ1 in der oben beschriebenen Weise zu bewirken.

Das Ansteuersignal SRE behält unabhängig von einem Pegelwechsel des Störsignaldetektionssignals EMI den Pegel einer logischen 1 bei, wenn das Freigabesignal FS den Pegel einer logischen 0 annimmt. Das Freigabesignal FS wird mittels einer Logikanordnung erzeugt, die ein NOR-Gatter NO4, ein dem NOR-Gatter NO4 nachgeschaltetes Verzögerungsglied DL3, einen dem Verzögerungsglied DL3 nachgeschalteten Schmitt-Trigger ST3 und einen dem Schmitt-Trigger ST3 nachgeschalteten Inverter IN2 aufweist, wobei am Ausgang des Inverters IN2 das Freigabesignal FS anliegt. Dem NOR-Gatter NO4 sind die Impulsfolgen PSH, PSL zugeführt. Das Verzögerungsglied DL3 ist so ausgebildet, dass es Pegelwechsel am Ausgang des NOR-Gatters NO4 von low- nach high verzögert mit einer Verzögerungszeit τ3 weitergibt. Mit jedem Impuls der Impulsfolgen PSH, PSL wird über diese Logikschaltung ein Low-Pegel des Freigabesignals FS für eine Zeitdauer τ1+τ3 bewirkt, um das NAND-Gatter NA3 während dieser Zeitdauer zu blockieren, und so zu verhindern, dass nach einem Nutzimpuls ein entsprechender Low-Impuls des Ansteuersignals erzeugt und der Nutzimpuls wiederholt gesendet wird.

Ein Low-Impuls des Ansteuersignals, nach dessen Maßgabe die Impulserzeugungsschaltung 110 wiederholt einen Impuls erzeugt und an den Kanal abgibt, kann somit nur dann erzeugt werden, wenn gerade kein Nutzimpuls über den Kanal übertragen wird, wobei dies bei der Sendevorrichtung gemäß Figur 6 dadurch gewährleistet ist, dass für die Zeitdauer τ1+τ3 nach Beginn des Impulses PSH bzw. PSL das NAND-Gatter am Ausgang der Ansteuersignalerzeugungsschaltung blockiert wird. Während dieser Zeitdauer findet zwar eine Detektion einer Potentialänderung an dem Kanal durch die Detektorschaltung statt, die detektierte Potentialänderung wird allerdings nicht zur Erzeugung eines Low-Impulses des Ansteuersignals herangezogen, da die Ansteuersignalerzeugungsschaltung 100 blockiert ist.

Anstelle der Ansteuersignalerzeugungsschaltung 100 kann auch die Detektorschaltung DET blockiert werden, um zu verhindern, dass während der Übertragung eines Nutzimpulses dieser Nutzimpuls als Störsignal detektiert wird.

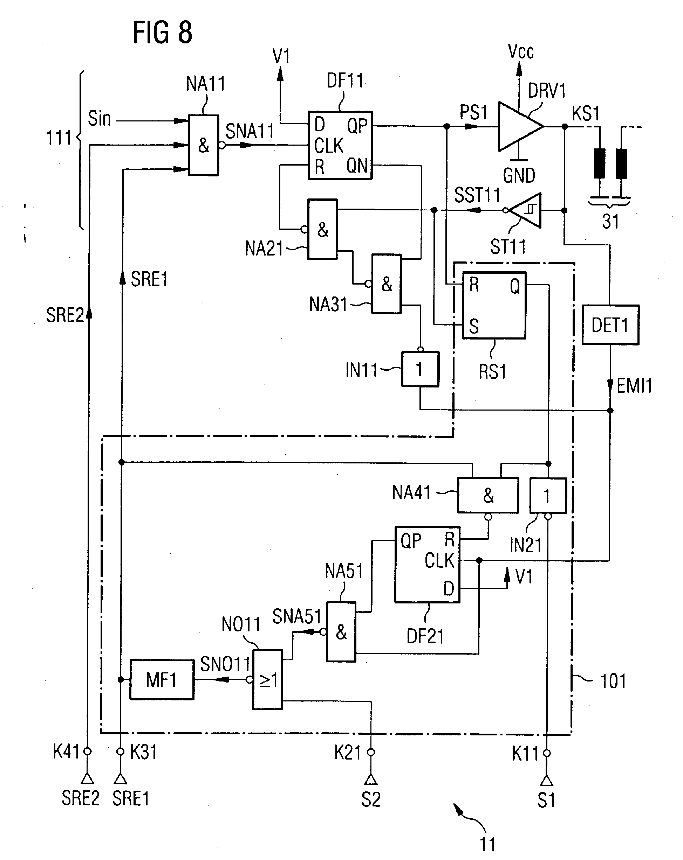

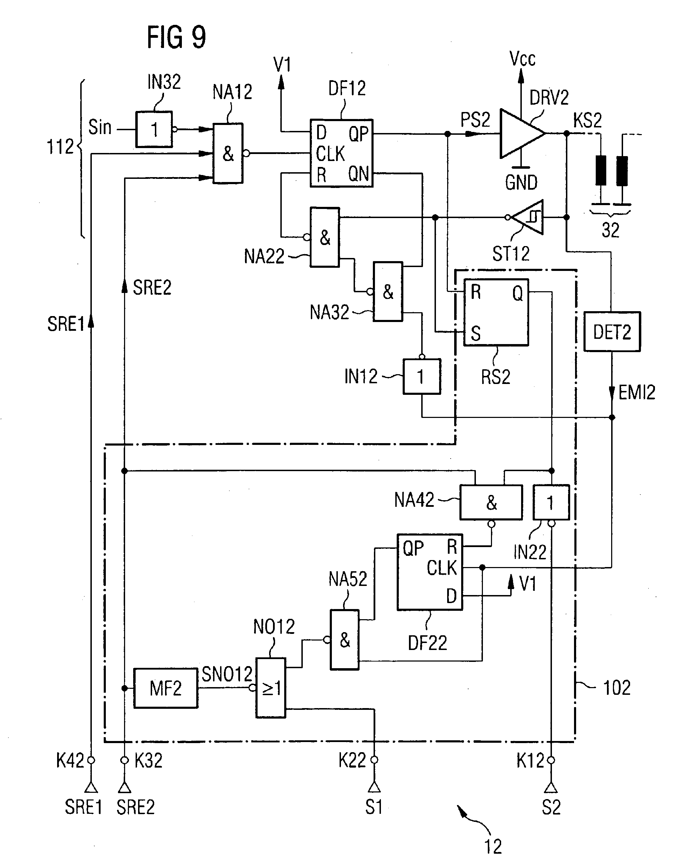

Anhand der Figuren 8 bis 11 wird nachfolgend eine Sendevorrichtung 10 zur Durchführung eines erfindungsgemäßen Übertragungsverfahrens gemäß Figur 5 veranschaulicht. Figur 8 zeigt ein Blockschaltbild der in Figur 4 dargestellten ersten Sendevorrichtung 11, und Figur 9 zeigt ein Blockschaltbild der in Figur dargestellten Sendevorrichtung 12.

Die beiden Sendevorrichtungen 11, 12 sind identisch aufgebaut und unterscheiden sich nur dadurch, dass der Sendevorrichtung 11 das Eingangssignal Sin direkt und der Sendevorrichtung 12 das Eingangssignal Sin mittels eines Inverters IN31 invertiert zugeführt ist. Zur Verdeutlichung des identischen Aufbaus der Sendevorrichtungen 11 und 12 unterscheiden sich die Bezugzeichen entsprechender Bauelemente bzw. entsprechender Signale in den Darstellungen gemäß der Figuren 8 und 9 lediglich in ihrer letzten Ziffer, wobei die Bezugszeichen von Bauelementen und Signalen der ersten Sendevorrichtung 11 mit der Ziffer 1 und die Bezugszeichen von Bauelementen und Signalen der zweiten Sendevorrichtung 12 mit der Ziffer 2 enden.

Die erste Sendevorrichtung 11 weist eine Ausgangsklemme K31 auf, an der das erste Ansteuersignal SRE1 zur Verfügung steht, das einer Anschlussklemme K42 der zweiten Sendevorrichtung 12 zugeführt ist. Entsprechend weist die zweite Sendevorrichtung eine Ausgangsklemme K32 auf, an der das zweite Ansteuersignal SRE2 zur Verfügung steht, das einer Anschlussklemme K41 der ersten Sendevorrichtung 11 zugeführt ist.

Neben den auch in Figur 4 dargestellten Ansteuersignalen SRE1, SRE2 liefern die beiden Sendevorrichtungen 11, 12 jeweils ein Statussignal S1 bzw. S2. Ein erstes Statussignal S1 der ersten Sendevorrichtung steht an einer ersten Ausgangsklemme K11 zur Verfügung und ist einer Eingangsklemme K22 der zweiten Sendevorrichtung 12 zugeführt. Entsprechend stellt die zweite Sendevorrichtung 12 ein zweites Statussignal S2 an einer Ausgangsklemme K12 zur Verfügung, welches einer Eingangsklemme K21 der ersten Sendevorrichtung 11 zugeführt ist.

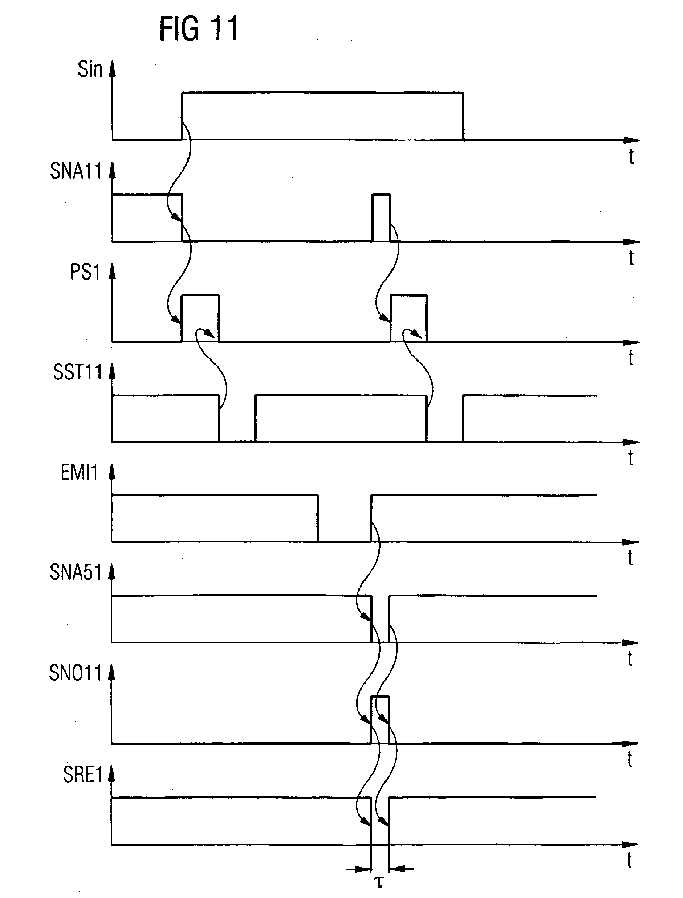

Wegen des identischen Aufbaus der beiden Sendevorrichtungen beschränkt sich die nachfolgende Beschreibung auf die Beschreibung der Sendevorrichtung 11 in Figur 8. Zeitliche Verläufe ausgewählter, in der Sendevorrichtung 11 gemäß Figur 8 eingezeichneter Signale sind in Figur 11 zum besseren Verständnis der Funktionsweise dargestellt.

Die Sendevorrichtung 11 umfasst ein NAND-Gatter NA11, dem das Sendesignal Sin, das in der ersten Sendevorrichtung 11 erzeugte erste Ansteuersignal SRE1 und das in der zweiten Sendevorrichtung 12 erzeugte zweite Ansteuersignal SRE2 zugeführt sind. Die beiden Ansteuersignale SRE1, SRE2 werden, wie noch erläutert werden wird, so erzeugt, dass sie den Wert einer logischen 1 annehmen, sofern kein Störsignal auf einem der beiden Kanäle detektiert wird, und dass sie für eine vorgegebene Zeitdauer auf einen Low-Pegel absinken, nachdem ein Störsignal detektiert wurde. Am Ausgang des NAND-Gatters NA11 liegt im störungsfreien Fall ein Ausgangssignal SNA11 mit einem logischen High-Pegel an, sofern das Eingangssignal Sin den Pegel einer logischen 0 aufweist. Das Ausgangssignal des NAND-Gatters NA11 ist dem Takteingang eines nachgeschalteten D-Flip-Flops DF11 zugeführt, wobei der D-Eingang dieses Flip-Flops an einem positiven Logikpotential V1 anliegt. Am nicht-invertierenden Ausgang QP dieses Flip-Flops DF11 steht die erste Impulsfolge PS1 zur Verfügung, die über eine Treiberschaltung DRV1 an den Kanal, von dem in Figur 8 lediglich der Übertrager 31 dargestellt ist, ausgegeben wird. Die Treiberschaltung DRV1 ist beispielsweise ein herkömmlicher Inverter, der den Kanal nach Maßgabe der Impulsfolge PS1 an ein positives Versorgungspotential Vcc oder Bezugspotential GND anlegt. Die Übertragung eines negativen Impulses ist bei der Datenübertragung über zwei Kanäle nicht erforderlich.

Wechselt das Eingangssignal Sin von einem Low-Pegel auf einen High-Pegel, so wechselt entsprechend das Ausgangssignal SNA11 des NAND-Gatters NA11 auf einen Low-Pegel, wie dies in Figur 11 dargestellt ist. Das D-Flip-Flop DF11 übernimmt mit der fallenden Flanke des Gattersignals SNA11 den Wert des Logikpotentials V1, wodurch der Pegel am nicht-invertierenden Ausgang des Flip-Flops DF11 auf den Wert einer logischen 1 ansteigt, so dass über den Treiber DRV1 ein positives Potential an den Kanal angelegt wird.

Ein an dem Kanal anliegendes Signal KS1 wird einem invertierenden Schmitt-Trigger ST11 zugeführt, dessen Ausgangssignal SST11 über ein NAND-Gatter NA21 dem Rücksetz-Eingang R des D-Flip-Flops DF11 zugeführt ist. Steigt das Signal KS1 über einen durch den Schmitt-Trigger ST11 vorgegebenen Schwellenwert, so nimmt das Ausgangssignal SST11 des Schmitt-Triggers ST11 einen Low-Pegel an und setzt über das NAND-Gatter NA21 das Flip-Flop DF11 zurück, wodurch der Pegel an dessen nichtinvertierendem Ausgang QP auf einen Low-Pegel absinkt. Bei der Erzeugung des am Ausgang QP des Flip-Flops anliegenden High-Impulses macht man sich zu Nutze, dass insbesondere bei der Signalübertragung über einen Kanal, der einen induktiven Übertrager enthält, das Potential an dem Kanal erst zeitverzögert dem Impuls PS1 folgt, so dass das D-Flip-Flop DF11 erst nach dieser Verzögerungszeit, die die Dauer des Impulses bestimmt, wieder zurückgesetzt wird. Die Dauer des Impulses nach einer steigenden Flanke des Eingangsignals Sin ist damit durch die Kanaleigenschaften und gegebenenfalls die Verzögerungszeiten der Logik-Bauelemente vorgegeben. Auf diese Weise wird die Pulsbreite des Sendeimpulses PS1 und damit die Stromaufnahme automatisch minimiert. Verzögerungszeiten der Logik-Bauelemente sind in der Darstellung gemäß Figur 1 im übrigen nur dort berücksichtigt sind, wo diese für das Funktionieren der Schaltungsanordnung erforderlich sind.

Das NAND-Gatter NA11 das Flip-Flop DF11, der Schmitt-Trigger ST11 und das NAND-Gatter NA21 bilden zusammen eine Impulserzeugungsschaltung 111, die immer dann einen Impuls PS1 am nicht-invertierenden Ausgang des D-Flip-Flops DF11 erzeugt und über den Treiber DRV1 an den Kanal ausgibt, wenn eines der Eingangssignale des NAND-Gatters NA11, also das Sendesignal Sin oder eines der beiden Ansteuersignale SRE1, SRE2 von einem Low-Pegel auf einen High-Pegel ansteigt, sofern die beiden anderen Signale einen High-Pegel aufweisen. Die Dauer des erzeugten Impulses ist dabei stets gleich und ist von den Eigenschaften des Kanals und den Laufzeiten der eingesetzten Logik-Gatter abhängig.

Die Sendevorrichtung 12 gemäß Figur 9 weist eine entsprechende, den Inverter IN32, das NAND-Gatter NA12, das Flip-Flop DF12, den Schmitt-Trigger ST12 und das NAND-Gatter NA22 umfassende Impulserzeugungsschaltung 112 auf. Diese Impulserzeugungsschaltung 112 erzeugt entsprechend der Funktionsweise der Impulserzeugungsschaltung nach Figur 8 dann einen Impuls PS2, wenn das Sendesignal Sin, welches durch den Inverter IN32 invertiert wird, von einem High-Pegel auf einen Low-Pegel absinkt, sofern die Ansteuersignale SRE1, SRE2 einen High-Pegel aufweisen. Außerdem erzeugt die Sendevorrichtung gemäß Figur 9 immer dann einen Impuls PS2, wenn das Sendesignal Sin einen logischen Low-Pegel aufweist und der Pegel eines der beiden Ansteuersignale SRE1, SRE2 von einem Low-Pegel auf einen High-Pegel wechselt.

Die Sendevorrichtung 11 gemäß Figur 8 umfasst weiterhin eine Störsignaldetektionsschaltung mit einer Detektorschaltung DET1 und einer Ansteuersignalerzeugungsschaltung 101, die das erste Ansteuersignal SRE1 zur Verfügung stellt. Der Aufbau der Detektorschaltung DET1 kann dem Aufbau der Detektorschaltung DET gemäß Figur 6 entsprechen, wobei die Referenzpotentiale in geeigneter Weise entsprechend den Potentialverhältnissen auf dem Kanal so gewählt sind, dass beliebige Signale auf dem Kanal, seien es Nutzsignale oder Störsignale, detektiert werden können. Ob eine an dem Kanal detektierte Potentialänderung aus einem Nutzsignal oder einem Störsignal resultiert wird in der Ansteuersignalerzeugungsschaltung 101 entschieden. Die Detektorschaltung DET1 liefert ein Störsignaldetektionssignal EMI1, welches den Wert einer logischen 0 annimmt, sofern das Kanalsignal K11 einen Wert außerhalb eines durch die in der Detektorschaltung verwendeten Referenzpotentiale vorgegebenen Intervalls annimmt. Das Störsignaldetektionssignal oder Kanaldetektionssignal EMI1 nimmt unabhängig davon, ob das Kanalsignal KS1 bedingt durch einen Nutzimpuls oder bedingt durch einen Störimpuls außerhalb dieses Intervalls liegt, den Wert einer logischen 0 an.

Das Störsignaldetektionssignal EMI1 ist dem Takteingang CLK eines weiteren D-Flip-Flops DF21 zugeführt, dessen D-Eingang an dem positiven Logikpotential V1 liegt. Dieses Flip-Flop DF21 übernimmt mit der fallenden Flanke des Störsignaldetektionssignals EMI1 das Logikpotential V1, so dass am nicht-invertierenden Ausgang QP der Wert einer logischen 1 anliegt. Das Störsignal-Detektionssignal EMI und das Ausgangssignal des Flip-Flop DF21 sind einem NAND-Gatter NA51 zugeführt. Das Ausgangssignal dieses NAND-Gatters NA51 bleibt auf dem Pegel einer logischen 1, solange sich das Ausgangssignal des Flip-Flops DF21 und das Störsignal-Detektionssignal EMI1 unterscheiden, solange also ein Signal auf dem Kanal detektiert wird. Steigt das Störsignaldetektionssignal EMI1 nach Abklingen dieses am Kanal anliegenden Signals auf den Wert einer logischen 1 an, so nimmt das Ausgangssignal des NAND-Gatters SNA51, den Wert einer logischen 0 an, wie dies in Figur 11 veranschaulicht ist.

Das Ausgangssignal SNA51 des NAND-Gatters NA51 ist einem NOR-Gatter NO11 zusammen mit dem Statussignal S2 der zweiten Sendevorrichtung 12 zugeführt. Dieses Statussignal S2, das entsprechend des noch erläuterten Statussignals S1 der Sendevorrichtung 11 erzeugt wird, nimmt den Pegel einer logischen 0 an, wenn keine Datenübertragung über den zweiten Kanal stattfindet. In diesem Fall wechselt mit einem Ende des am Kanal detektierten Signals, das heißt bei einem Ansteigen des Störsignaldetektionssignals EMI1 auf den Wert einer logischen 1, das Ausgangssignal SNO11 des NOR-Gatters NO11 auf den Pegel einer logischen 1, wie in Figur 11 dargestellt ist.

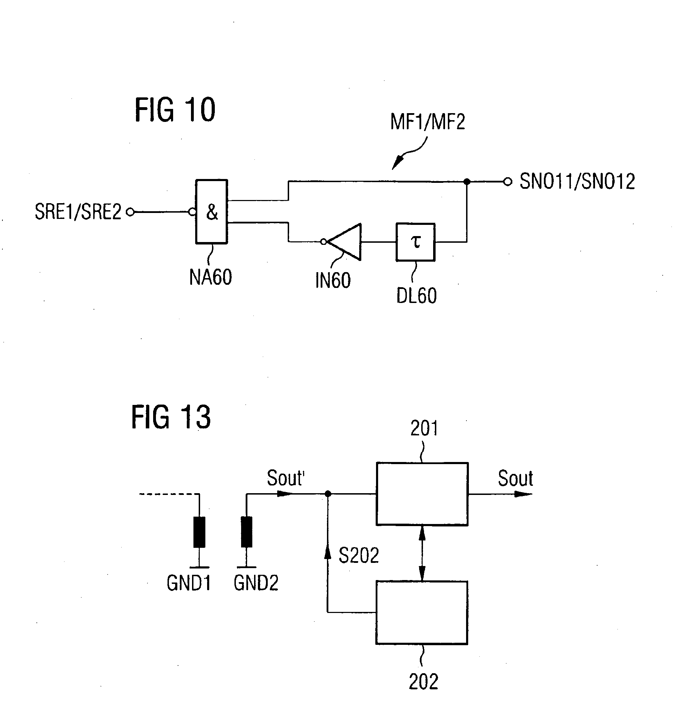

Das Ausgangssignal SNO11 des NOR-Gatters NO11 ist einem Monoflop MF1 zugeführt, das beispielsweise entsprechend der Darstellung in Figur 10 aufgebaut ist. Dieses Monoflop umfasst ein NAND-Gatter NA60, dem das Signal SNO11 zum Einen direkt und zum Anderen verzögert mittels eines Verzögerungsgliedes DL60 und invertiert mittels eines Inverters IN60 zugeführt ist. Das Monoflop MF1 erzeugt damit mit jeder steigenden Flanke des Ausgangssignals SNO11 ein Ansteuersignal SRE1, das mit jeder fallenden Flanke des Signals SNO11 für eine Zeitdauer τ den Pegel einer logischen 0 annimmt.

Wenn das Ansteuersignal SRE1 auf den Pegel der logischen 0 absinkt, steigt das Ausgangssignal des NAND-Gatters NA11 auf den Pegel einer logischen 1 an, wobei mit der nächsten fallenden Flanke dieses Signals SNA11 nach der Verzögerungszeit τ der Pegel am nicht-invertierenden Ausgang QP des Flip-Flops DF11 wieder auf einen High-Pegel zur Erzeugung eines wiederholten über den Treiber DRV1 an den Kanal ausgegebenen Impuls ansteigt.

Wie erläutert, unterscheidet das Störsignaldetektionssignal nicht zwischen Störsignal und Nutzsignal auf dem Kanal. Um zu verhindern, dass ein über den Kanal übertragener Nutzimpuls, der auch durch die Detektionsschaltung DET1 detektiert wird, fälschlicherweise als Störimpuls interpretiert wird und zur Erzeugung eines Low-Impulses des Ansteuersignals SRE1, und damit zu einer Impulswiederholung, führt, ist in dem Beispiel ein RS-Flip-Flop RS1 vorgesehen, dessen Rücksetzeingang R an den nicht-invertierenden Ausgang des Flip-Flops DF11 und dessen Setz-Eingang an den Ausgang des Schmitt-Triggers ST11 angeschlossen ist. Der nicht-invertierende Ausgang des Flip-Flops RS1 ist über ein NAND-Gatter NA41 dem Rücksetzeingang des D-Flip-Flops DF21 zugeführt. Das Flip-Flop RS1 wird mit jeder steigenden Flanke der Impulsfolge PS1 zurückgesetzt und setzt über das NAND-Gatter NA41 das D-Flip-Flop DF21 zurück, so dass ein aus der Übertragung des Nutzimpulses resultierender Low-Pegel des Störsignaldetektionssignals EMI1 den Pegel des Ansteuersignals SRE1 nicht ändern kann. Das RS-Flip-Flop RS1 und damit das D-Flip-Flop DF21 bleiben solange zurückgesetzt, bis der Schmitt-Trigger ST11 das Flip-Flop RS1 setzt und das D-Flip-Flop DF11 zurücksetzt. Erst dann, wenn die Impulsübertragung über den ersten Kanal beendet ist, kann eine durch die Detektorschaltung DET1 detektierte Potentialänderung an dem Kanal eine Änderung an dem Signal-Pegel des Ansteuersignals SRE1 hervorrufen, um zu einer erneuten Impulserzeugung zu führen.

Dem NAND-Gatter NA41 ist neben dem Ausgangssignal des Flip-Flops RS1 das Ansteuersignal SRE1 zugeführt, wodurch mit jeder Erzeugung eines Low-Impulses des Ansteuersignals SRE1 das D-Flip-Flop DF21 zurückgesetzt wird, um eine erneute Störsignaldetektion zu starten.

Die erfindungsgemäße Sendevorrichtung 11 erzeugt stets dann einen Low-Impuls des Ansteuersignals SRE1, der zu einer Wiederholung des Impulses PS1 führt, wenn eine Potentialänderung an dem Kanal detektiert wird, wobei Potentialänderungen während der Übertragung eines Nutzimpulses ausgeblendet werden, so dass diese nicht zur Erzeugung eines Low-Impulses des Ansteuersignals SRE1 führen können.

Der Ausgang des RS-Flip-Flops RS1 ist weiterhin einem Inverter IN21 zugeführt, dessen Ausgang das Statussignal S1 zur Verfügung steht. Dieses Statussignal S1 nimmt einen High-Pegel an, solange das Flip-Flop RS1 gesetzt ist, solange also ein Nutzimpuls übertragen wird. Das Statussignal S2 in der zweiten Sendevorrichtung 12 wird entsprechend erzeugt und nimmt den Wert einer logischen 1 an, solange mittels der zweiten Sendevorrichtung ein Nutzimpuls übertragen wird.

Wie bereits oben erläutert wurde, blockiert das Statussignal S2 die Erzeugung eines Low-Impulses des Ansteuersignals SRE1, solange es den Wert einer logischen 1 annimmt. Da das erste Ansteuersignal SRE1 sowohl eine Wiederholung eines Nutzimpulses auf dem ersten Kanal als auch eine Wiederholung eines Nutzimpulses auf dem zweiten Kanal bewirkt, sorgt das durch die zweite Sendevorrichtung erzeugte Statussignal S2 dafür, dass während der Zeitdauer, während der gerade eine Impulsübertragung auf dem zweiten Kanal stattfindet, kein Low-Pegel des ersten Ansteuersignals SRE1 erzeugt wird, um so zu verhindern, dass gleichzeitig mit der Übertragung eines Nutzimpulses ein Wiederauffrischungsimpuls generiert wird. Der Low-Impuls des Ansteuersignals SRE1 wird erst dann erzeugt, nachdem das Statussignal S2 wieder einen Low-Pegel angenommen hat, nachdem also die Datenübertragung auf dem zweiten Kanal beendet wurde.

Da bei der Sendevorrichtung gemäß der Figuren 8 und 9 die Impulsfolge PS1, PS2 zeitlich versetzt zueinander erzeugt werden, steht immer einer der beiden Kanäle zur Störsignaldetektion zur Verfügung, wobei ein auf einem der beiden Kanäle detektierter Störimpuls erst dann zu einer Wiederholung des Nutzimpulses auf dem anderen der beiden Kanäle führt, wenn auf diesem anderen der beiden Kanäle eine Nutzimpulsübertragung beendet ist.

Das Ausgangssignal SST11 des Schmitt-Triggers ST11 ist dem Rücksetz-Eingang R des D-Flip-Flops DF11 über ein NAND-Gatter NA21 zugeführt, wobei dem anderen Eingang dieses Gatters NA21 das Ausgangssignal eines weiteren NAND-Gatters NA31 zugeführt ist, welches als Eingangssignale das am invertierenden Ausgang des Flip-Flops DF11 anliegende Signale und das mittels eines Inverters IN11 invertierte Störsignaldetektionssignal EMI1 zugeführt ist. Diese Anordnung mit dem Inverter IN11 und den Gattern NA21, NA31 "blockiert" das Flip-Flop DF11 während des Vorliegens eines Störsignals, indem das Flip-Flop dauerhaft zurückgesetzt bleibt, und verhindert dadurch, dass Nutzsignale während einer Störung an den Kanal ausgegeben werden. Das Nutzsignal wird damit erst nach Abklingen der Störung ausgelöst durch einen Low-Impuls des Signals SRE1 erzeugt und an den Kanal ausgesendet.

Bei den Sendevorrichtungen nach den Figuren 8 und 9 ist die zu übertragende Nutzinformation in jeweils einem Impuls enthalten, der abhängig von dem Sendesignal erzeugt und über einen ersten oder zweiten Kanal übertragen wird. Dieser Impuls wird nach der Detektion eines Störsignals auf dem Kanal wiederholt übertragen. Selbstverständlich können durch eine abgewandelte, nicht näher dargestellte Impulserzeugungsschaltung auch längere Impulsfolgen abhängig von einem oder mehreren Sendesignalen erzeugt und übertragen werden, wobei diese Impulsfolge ebenfalls bei Detektion eines Störsignals erneut übertragen wird.

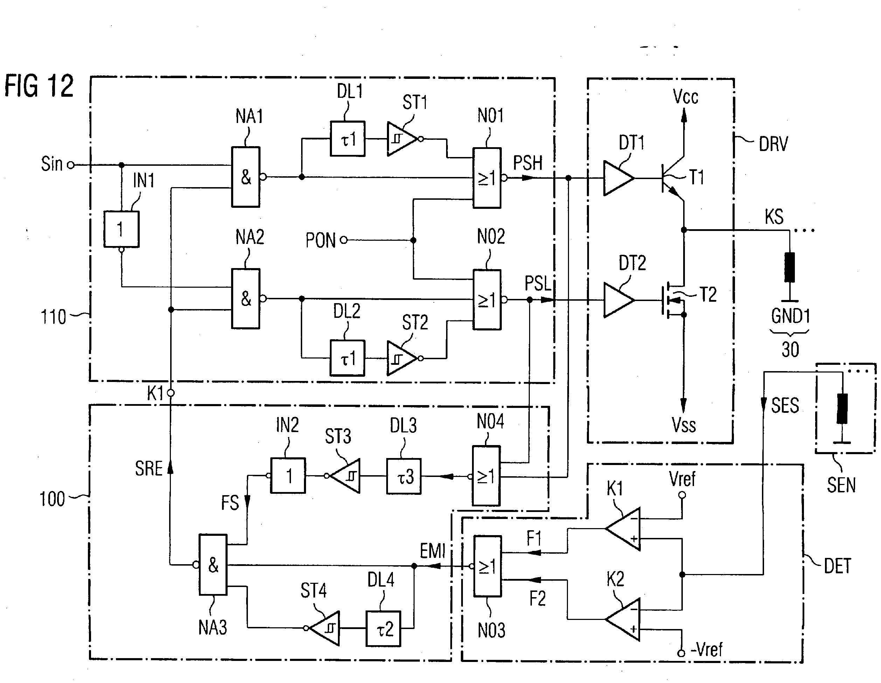

Bei den bislang dargestellten Ausführungsbeispielen wird davon ausgegangen, dass die Kanäle sowohl zur Signalübertragung als auch zur Störsignaldetektion dienen. Bei einer weiteren Ausführungsform, ist vorgesehen, zur Störsignaldetektion einen Sensor vorzusehen, der ausschließlich zur Störsignaldetektion und nicht zur Nutzsignalübertragung dient. Figur 12 zeigt ein Ausführungsbeispiel einer Sendevorrichtung zur Durchführung eines solchen Verfahrens. Diese Sendevorrichtung ist eine Abwandlung der Vorrichtung gemäß Figur 6 und unterscheidet sich von dieser dadurch, dass zur Störsignaldetektion ein Sensor SEN vorgesehen ist, an die Detektionsschaltung DET anstelle des Kanals angeschlossen ist. Die Detektionsschaltung wertet ein Sensorsignal SES in der oben für das Kanalsignal KS erläuterten Weise aus, um dadurch das Aussenden eines Korrekturimpulses bei Detektion eines Störimpulses zu bewirken.

Der Sensor SEN ist benachbart zu dem Übertragungskanal ausgebildet und so gestaltet, dass in ihm entsprechende Störsignals wie in dem Kanal bei einer von außen angelegten Störung hervorgerufen werden. Der Sensor besteht im einfachsten Fall aus einer parallel zu dem Übertragungskanal verlaufenden Leitung, die gegebenenfalls auch einen Übertrager aufweist, um mittels des Sensors SEN den Übertragungskanal möglichst genau nachzubilden.

Die Störsignaldetektion mittels des Sensors SEN kann alternativ oder zusätzlich zu der Störsignaldetektion auf dem Übertragungskanal eingesetzt werden. So kann beispielsweise zu einer Sendevorrichtung nach Figur 8, die Störungen auf dem Übertragungskanal überwacht, eine Sensoranordnung zur Ermittlung von Störsignalen auf dem Kanal eingesetzt werden, die ein nicht näher dargestelltes weiteres Ansteuersignal dem NAND-Gatter NA11 zuführt.

Bei der Störsignaldetektion, sei es auf dem Übertragungskanal oder auf dem Sensor, kann nicht ermittelt werden, wodurch die Störung auf dem Kanal hervorgerufen wird.

Bei einer Ausführungsform des erfindungsgemäßen Verfahrens ist deshalb vorgesehen in regelmäßigen oder unregelmäßigen Zeitabständen oder ausgelöst durch bestimmte Ereignisse, auf der Empfängerseite "Störungen" oder "Störimpulse" in den Kanal einzukoppeln, um so ein wiederholtes Senden eines Sendeimpulses zu provozieren. Der Empfänger kann dadurch jederzeit, es sei denn es tritt eine extern hervorgerufene Störung auf, den aktuellen Sendeimpuls bzw. den Zustand des Sendesignals abfragen.

Figur 13 zeigt ein Ausführungsbeispiel einer geeigneten Empfängervorrichtung 2, die an den Kanal angeschlossen ist. Die Empfängervorrichtung umfasst einen an den Kanal angeschlossenen Empfänger 201, der die auf dem Kanal detektierten Signale in das Ausgangssignal umsetzt. Die Empfängervorrichtung umfasst des weiteren eine an den Kanal angeschlossene Treiberschaltung 202 die Quasi-Störsignale an den Kanal aussendet, um senderseitig eine Wiederholung des Sendeimpulses oder der Sendeimpulsfolge zu provozieren. Die Treiberschaltung ist beispielsweise eine Tristate-Treiberschaltung nach Art der Treiberschaltung DRV in Figur 6 oder 12. Der Empfänger 201 und die Treiberschaltung 202 sind miteinander gekoppelt, wodurch der Empfänger die Aussendung eines Quasi-Störimpulses S202 auslösen kann, wenn beispielsweise ein Empfangssignal Sout' nicht eindeutig in das Signal Sout umgesetzt werden kann. Des weiteren blockiert der Treiber 202 den Empfänger bei Aussenden eines Quasi-Störimpulses, um einen solchen Impuls nicht fälschlicherweise als Nutzimpuls zu empfangen.

Die Provokation eines erneuten Sendens eines Nutzimpulses oder einer Nutzimpulsfolge funktioniert insbesondere bei Kanälen, die einen Transformator enthalten, da Transformatoren bidirektionale Bauelement sind, so dass die empfängerseitig erzeugten Signale an den Sender übertragen und dort als Störsignale detektiert werden, was ein erneutes Senden des Nutzsignals auslöst.

### Bezugszeichenliste

- 1, 10: Sendevorrichtung
- 100: Ansteuersignalerzeugungsschaltung
- 101, 102: Steuersignalerzeugungsschaltungen
- 11: erste Sendevorrichtung
- 110: Impulserzeugungsschaltung
- 111, 112: Impulserzeugungsschaltungen
- 12: zweite Sendevorrichtung
- 2: Empfängervorrichtung
- 21: Empfängervorrichtung
- 3: Übertrager
- 31, 32: Übertrager
- DET: Detektorschaltung
- DET1, DET2: Detektorschaltungen
- DF11-DF22: D-Flip-Flops
- DL1-DL4: Verzögerungsglieder
- DL60: Verzögerungsglied
- DRV: Treiberschaltung
- DRV1, DRV2: Treiber
- DT1, DT2: Treiber
- EMI: Störsignal-Detektionssignal
- EMI1, EMI2: Störsignal-Detektionssignale
- F1, F2: Komparatorausgangssignale
- FS: Freigabesignal
- GND1, GND2: Bezugspotential
- IN1, IN2: Inverter
- IN11-IN22: Inverter
- IN60: Inverter
- K1, K2: Komparatoren
- K11, K31: Ausgangsklemmen
- K12, K32: Ausgangsklemmen
- K21, K41: Eingangsklemmen
- K22, K42: Eingangsklemmen
- KS: Kanalsignal
- KS1, KS2: Kanalsignale
- MF1, MF2: Monoflops
- NA11-NA52: NAND-Gatter
- NA1-NA3: NAND-Gatter
- NA60: NAND-Gatter
- NO11, NO12: NOR-Gatter
- NO1-NO4: NOR-Gatter
- PF1, PF2: Impulsfolgen
- PS: Impulssignal
- PS1: erstes Impulssignal
- PS2: zweites Impulssignal
- PSH, PSL: Impulsfolgen
- S1, S2: Statussignale
- S202: Quasi-Störsignal
- SEN: Sensor
- SES: Sensorsignal
- Sin: Sendesignal
- Sout: Ausgangssignal
- Sout': Empfangssignal
- SRE: Ansteuersignal
- SRE1: erstes Ansteuersignal
- SRE2: zweites Ansteuersignal
- ST11, ST12: Schmitt-Trigger
- ST1-ST4: Schmitt-Trigger
- T1, T2: Transistoren
- Vcc: positives Versorgungspotential
- Vss: negatives Versorgungspotential

## Patentansprüche

1. Verfahren zur Übertragung einer in einem Sendesignal (Sin) enthaltenen Information über wenigstens einen Kanal (40; 42, 44) von einer Sendevorrichtung (1) zu einem Empfänger (2), wobei das Verfahren senderseitig folgende Merkmale umfasst:
- Erzeugen wenigstens einer wenigstens einen Impuls umfassenden Impulsfolge (PS; PS1, PS2) nach Maßgabe des Sendesignals (Sin),
- senderseitiges Ausgeben der Impulsfolge (PS; PS1, PS2) an den wenigstens einen Kanal (40; 42, 44),
- senderseitiges Überwachen des Kanals (40; 42, 44) hinsichtlich des Vorhandenseins eines von extern in den Kanal (40; 42) eingekoppelten Störsignals,
- Wiederholen der Impulsfolge (PS; PS1, PS2) bei einer senderseitigen Detektion eines von extern in den Kanal (40; 42) eingekoppelten Störsignals auf dem Kanal (40; 42, 44).

2. Verfahren nach Anspruch 1, bei dem eine wenigstens einen Impuls umfassende erste Impulsfolge (PS1) nach Maßgabe des Sendesignals (Sin) erzeugt und über einen ersten Kanal (42) übertragen wird, bei dem zeitlich versetzt zu der ersten Impulsfolge (PS1) eine wenigstens einen Impuls umfassende zweite Impulsfolge (PS2) erzeugt und über einen zweiten Kanal (44) übertragen wird, wobei nach einer Detektion eines Störsignals auf dem ersten und/oder zweiten Kanal (42, 44) die erste Impulsfolge (PS1) wiederholt übertragen wird und wobei nach einer Detektion eines Störsignals auf dem zweiten und/oder ersten Kanal (44, 42) die zweite Impulsfolge (PS2) wiederholt übertragen wird.

3. Verfahren nach Anspruch 1 oder 2, bei dem die wenigstens eine Impulsfolge (PS; PS1, PS2) bei einer Detektion eines Störsignals erst dann übertragen wird, nachdem kein Störsignal mehr detektiert wird.

4. Verfahren nach einem der vorangehenden Ansprüche, bei dem bei einer Detektion eines Störsignals vor einem ersten Senden der Impulsfolge (PS; PS1, PS2; PS3, PS4) die Impulsfolge erst gesendet wird, nachdem kein Störsignal mehr detektiert wird.

5. Verfahren nach einem der vorangehenden Ansprüche, bei dem das Sendesignal (Sin) ein zweiwertiges, einen ersten oder zweiten Signalpegel (P1, P2) aufweisendes Signal ist, wobei die wenigstens eine Impulsfolge (PS; PS1, PS2) einen Impuls umfasst, der nach einem Wechsel des Signalpegels erzeugt wird.

6. Verfahren nach Anspruch 5 bei dem bei einem Wechsel des Signalpegels des Sendesignals (Sin) von dem ersten Signalpegel (P1) zu dem zweiten Signalpegel die Impulsfolge einen bezogen auf ein Bezugspotential positiven Impuls und bei einem Wechsel des Signalpegels des Sendesignals (Sin) von dem zweiten Signalpegel (P2) zu dem ersten Signalpegel einen bezogen auf ein Bezugspotential negativen Impuls umfasst.

7. Verfahren nach Anspruch 5 bei dem bei einem Wechsel des Signalpegels des Sendesignals (Sin) von dem ersten Signalpegel (P1) zu dem zweiten Signalpegel (P2) die wenigstens einen Impuls umfassende erste Impulsfolge (PS1) erzeugt und über den ersten Kanal (42) übertragen wird und bei dem bei einem Wechsel des Signalpegels (P2) des Sendesignals (Sin) von dem zweiten Signalpegel (P2) zu dem ersten Signalpegel (P1) die wenigstens einen Impuls umfassende zweite Impulsfolge (PS2) erzeugt und über den zweiten Kanal (44) übertragen wird.

8. Verfahren nach Anspruch 1, 2 oder 3, bei dem bei einem Wechsel des Sendesignals von dem ersten Signalpegel (P1) zu dem zweiten Signalpegel (P2) eine mehrere Impulse umfassende erste Impulsfolge (PS3) erzeugt wird und bei dem bei einem Wechsel des Signalpegels des Sendesignals von dem zweiten Signalpegel (P2) zu dem ersten Signalpegel (P1) eine mehrere Impulse umfassende zweite Impulsfolge (PS4) erzeugt wird, wobei die erste Impulsfolge (PS3) und die zweite Impulsfolge (PS4) sich unterscheiden und über einen gemeinsamen Kanal (40) übertragen werden.

9. Verfahren nach einem der vorangehenden Ansprüche, bei dem die wenigstens eine Impulsfolge abhängig von mehreren Sendesignalen erzeugt wird.

10. Verfahren nach einem der vorangehenden Ansprüche, bei dem der Kanal mittels eines benachbart zu dem Kanal angeordneten Sensors (SEN) überwacht wird.

11. Verfahren nach einem der vorangehenden Ansprüche, bei dem empfängerseitig wenigstens ein Impuls in den Kanal eingekoppelt wird, der als Störsignal detektiert wird, um **dadurch** eine Wiederholung der Impulsfolge hervorzurufen.

12. Verwendung eines Verfahrens nach einem der vorangehenden Ansprüche zur Signalübertragung über einen eine Potentialbarriere, insbesondere ein magnetisches Kopplungselement enthaltenden Kanal.

13. Sendevorrichtung, die folgende Merkmale aufweist:
- eine Eingangsklemme zur Zuführung wenigstens eines Sendesignals (Sin) und wenigstens eine an einen Übertragungskanal (30; 31, 32) koppelbare Ausgangsklemme,
- wenigstens eine zwischen die Eingangsklemme und die Ausgangsklemme geschaltete, wenigstens einen Ansteuereingang aufweisende Impulserzeugungsschaltung (100; 111, 112), die nach Maßgabe des Sendesignals eine wenigstens einen Impuls aufweisende Impulsfolge (PS; PS1, PS2) erzeugt,
- eine senderseitig an den Kanal koppelbare Störsignaldetektionsschaltung (DET, 100; DET1, 111, DET2, 112) zur Detektion eines von extern in den Kanal (40; 42) eingekoppelten Störsignals, die abhängig von der Detektion eines von extern in den Kanal (40; 42) eingekoppelten Störsignals ein Ansteuersignal (SRE1, SRE2) bereitstellt, wobei die Impulserzeugungsschaltung (100; 111, 112) die Impulsfolge (PS; PS1, PS2) nach Maßgabe des Ansteuersignals (SRE; SRE1, SRE2) wiederholt erzeugt.

14. Sendevorrichtung nach Anspruch 13, bei der die Störsignaldetektionsschaltung (DET, 100; DET1, 111, DET2, 112) zwischen die Ausgangsklemme der Sendevorrichtung (1; 11, 12) und den Ansteuereingang der Impulserzeugungsschaltung (100; 111, 112) geschaltet ist.

15. Sendevorrichtung nach Anspruch 13, die einen benachbart zu dem Kanal angeordneten Sensor (SEN) aufweist, wobei die Störsignaldetektionsschaltung (DET, 100; DET1, 111, DET2, 112) zwischen den Sensor (SEN) und den Ansteuereingang der Impulserzeugungsschaltung (100; 111, 112) geschaltet ist

16. Sendevorrichtung nach einem der Ansprüche 13 bis 15, bei der die Störsignaldetektionsschaltung (DET, 100; DET1, 111, DET2, 112) eine an die Ausgangsklemme der Sendevorrichtung angeschlossene Detektorschaltung (DET; DET1, DET2) und eine der Detektorschaltung nachgeschaltete Ansteuersignalerzeugungsschaltung (100; 111, 112) aufweist, die das Ansteuersignal (SRE; SRE1, SRE2) abhängig von einem Ausgangssignal der Detektorschaltung (DET; DET1, DET2) bereitstellt.

17. Sendevorrichtung nach Anspruch 16, bei der die Ansteuersignalerzeugungsschaltung (100; 111, 112) das Ansteuersignal (SRE; SRE1, SRE2) zudem abhängig von der wenigstens einen Impulsfolge (PSH, PSL; PS1, PS2) erzeugt.

18. Sendevorrichtung nach einem der Ansprüche 13 bis 17, die eine erste an einen ersten Kanal (31) koppelbare Ausgangsklemme, eine zweite an einen zweiten Kanal (31) koppelbare Ausgangsklemme aufweist, wobei zwischen die Eingangsklemme und die erste Ausgangsklemme eine erste Impulserzeugungsschaltung (11) und zwischen die Eingangsklemme und die zweite Ausgangsklemme eine zweite Impulserzeugungsschaltung (12) geschaltet ist, und wobei zwischen die erste Ausgangsklemme und den Steuereingang der ersten Impulserzeugungsschaltung (11) eine erste Störsignaldetektionsschaltung (DET1, 111), die ein erstes Ansteuersignals (SRE1) bereitstellt, und zwischen die zweite Ausgangsklemme und den Steuereingang der zweiten Impulserzeugungsschaltung eine zweite Störsignaldetektionsschaltung (DET2, 112), die ein zweites Ansteuersignal bereitstellt, geschaltet ist.

19. Sendevorrichtung nach Anspruch 18, bei der die erste Impulserzeugungsschaltung (11) die Impulsfolge (PS1) nach Maßgabe des ersten Ansteuersignals (SRE1) und nach Maßgabe des zweiten Ansteuersignals (SRE2) wiederholt bereitstellt und/oder bei der die zweite Impulserzeugungsschaltung (11) die Impulsfolge (PS1) nach Maßgabe des zweiten Ansteuersignals (SRE2) und nach Maßgabe des ersten Ansteuersignals (SRE1) wiederholt bereitstellt.

20. Sendevorrichtung nach Anspruch 19, bei der die erste Störsignaldetektionsschaltung (DET1, 101) das erste Ansteuersignal (SRE1) nach Maßgabe eines zweiten Statussignals (S2), das anzeigt, ob eine zweite Impulsfolge (PS2) an den zweiten Kanal (31) übertragen wird, erzeugt und/oder bei der die zweite Störsignaldetektionsschaltung (DET2, 102) das zweite Ansteuersignal (SRE1) nach Maßgabe eines ersten Statussignals (S1) das anzeigt, ob eine erste Impulsfolge (PS2) an den ersten Kanal (31) übertragen wird, erzeugt.

21. Sendevorrichtung nach einem der Ansprüche 13 bis 20, bei der die wenigstens eine Impulserzeugungsschaltung (100; 111, 112) die Impulsfolge (PSH, PSL; PS1, PS2) nach einer vorgegebenen Flanke des Eingangssignals (Sin) erzeugt.

22. Sendevorrichtung nach einem der Ansprüche 13 bis 21, bei der die wenigstens eine Impulserzeugungsschaltung (100; 111, 112) die Impulsfolge nach einer vorgegebenen Flanke des Ansteuersignals (SRE; SRE1, SRE2) und bei einem vorgegebenen Pegel des Eingangssignals (Sin) wiederholt.

23. Signalübertragungsanordnung mit einer Sendevorrichtung nach einem der vorangehenden Ansprüche 13 bis 22 und einer Empfängervorrichtung (2), die einen an den Kanal gekoppelten Empfänger (201) und eine an den Kanal gekoppelten Treiber (202) aufweist, der dazu ausgebildet ist, Signale an den Kanal abzugeben, die in der Sendevorrichtung als Störsignals detektiert werden.

## Claims

1. Method for transmitting information held in a transmission signal (Sin) from a transmission apparatus (1) to a receiver (2) via at least one channel (40; 42, 44), where the method comprises the following features at the transmitter end:
- at least one pulse sequence (PS; PS1, PS2) comprising at least one pulse is generated as stipulated by the transmission signal (Sin),
- the transmitter outputs the pulse sequence (PS; PS1, PS2) to the at least one channel (40; 42, 44),
- the transmitter monitors the channel (40; 42, 44) for the presence of an interference signal which is input into the channel (40; 42) externally,
- the pulse sequence (PS; PS1, PS2) is repeated if the transmitter detects an interference signal which is input into the channel (40; 42) externally on the channel (40; 42, 44).

2. Method according to Claim 1, in which a first pulse sequence (PS1) comprising at least one pulse is generated as stipulated by the transmission signal (Sin) and is transmitted via a first channel (42), in which a second pulse sequence (PS2) comprising at least one pulse is generated with a time stagger with respect to the first pulse sequence (PS1) and is transmitted via a second channel (44), with detection of an interference signal on the first and/or second channel (42, 44) being followed by the first pulse sequence (PS1) being transmitted again and with detection of an interference signal on the second and/or first channel (44, 42) being followed by the second pulse sequence (PS2) being transmitted again.

3. Method according to Claim 1 or 2, in which the at least one pulse sequence (PS; PS1, PS2) is not transmitted, upon detection of an interference signal, until after no further interference signal is detected.

4. Method according to one of the preceding claims, in which detection of an interference signal before the pulse sequence (PS; PS1, PS2; PS3, PS4) is transmitted for the first time entails the pulse sequence not being transmitted until after no further interference signal is detected.

5. Method according to one of the preceding claims, in which the transmission signal (Sin) is a bivalent signal having a first or a second signal level (P1, P2), with the at least one pulse sequence (PS; PS1, PS2) comprising a pulse which is produced after a change in the signal level.

6. Method according to Claim 5, in which a change in the signal level of the transmission signal (Sin) from the first signal level (P1) to the second signal level involves the pulse sequence comprising a pulse which is positive with respect to a reference-ground potential, and a change in the signal level of the transmission signal (Sin) from the second signal level (P2) to the first signal level involves the pulse sequence comprising a pulse which is negative with respect to a reference-ground potential.

7. Method according to Claim 5, in which a change in the signal level of the transmission signal (Sin) from the first signal level (P1) to the second signal level (P2) entails the first pulse sequence (PS1), which comprises at least one pulse, being generated and transmitted via the first channel (42), and in which a change in the signal level (P2) of the transmission signal (Sin) from the second signal level (P2) to the first signal level (P1) entails the second pulse sequence (PS2), which comprises at least one pulse, being generated and transmitted via the second channel (44).

8. Method according to Claim 1, 2 or 3, in which a change in the transmission signal from the first signal level (P1) to the second signal level (P2) entails a first pulse sequence (PS3), which comprises a plurality of pulses, being generated, and in which a change in the signal level of the transmission signal from the second signal level (P2) to the first signal level (P1) entails a second pulse sequence (PS4), which comprises a plurality of pulses, being generated, the first pulse sequence (PS3) and the second pulse signal (PS4) differing and being transmitted via a common channel (40).

9. Method according to one of the preceding claims, in which the at least one pulse sequence is produced on the basis of a plurality of transmission signals.

10. Method according to one of the preceding claims, in which the channel is monitored by means of a sensor (SEN) arranged adjacently to the channel.

11. Method according to one of the preceding claims, in which the receiver inputs at least one pulse into the channel, said pulse being detected as an interference signal in order to bring about repetition of the pulse sequence.

12. Use of a method according to one of the preceding claims for signal transmission via a channel containing a potential barrier, particularly a magnetic coupling element.

13. Transmission apparatus which has the following features:
- an input terminal for supplying at least one transmission signal (Sin), and at least one output terminal which can be coupled to a transmission channel (30; 31, 32),
- at least one pulse-generating circuit (100; 111, 112) which is connected between the input terminal and the output terminal, has at least one actuating input and generates a pulse sequence (PS, PS1, PS2) having at least one pulse as stipulated by the transmission signal,
- an interference signal detection circuit (DET, 100; DET1, 111, DET2, 112), which the transmitter can couple to the channel, for detecting an interference signal which is input into the channel (40; 42) externally, which provides an actuating signal (SRE1, SRE2) on the basis of the detection of an interference signal which is input into the channel (40; 42) externally, with the pulse-generating circuit (100; 111, 112) generating the pulse sequence (PS, PS1, PS2) again as stipulated by the actuating signal (SRE; SRE1, SRE2).

14. Transmission apparatus according to Claim 13, in which the interference signal detection circuit (DET, 100; DET, 111, DET2, 112) is connected between the output terminal of the transmission apparatus (1; 11, 12) and the actuating input on the pulse-generating circuit (100; 111, 112).

15. Transmission apparatus according to Claim 13, which has a sensor (SEN) arranged adjacently to the channel, with the interference signal detection circuit (DET, 100; DET1, 111, DET2, 112) being connected between the sensor (SEN) and the actuating input on the pulse-generating circuit (100; 111, 112).

16. Transmission apparatus according to one of Claims 13 to 15, in which the interference signal detection circuit (DET, 100; DET1, 111, DET2, 112) has a detector circuit (DET; DET1, DET2), connected to the output terminal of the transmission apparatus, and an actuating-signal-generating circuit (100; 111, 112), connected downstream of the detector circuit, which provides the actuating signal (SRE; SRE1, SRE2) on the basis of an output signal from the detector circuit (DET; DET1, DET2).

17. Transmission apparatus according to Claim 16, in which the actuating-signal-generating circuit (100; 111, 112) also generates the actuating signal (SRE; SRE1, SRE2) on the basis of the at least one pulse sequence (PSH, PSL; PS1, PS2).

18. Transmission apparatus according to one of Claims 13 to 17, which has a first output terminal, which can be coupled to a first channel (31), a second output terminal, which can be coupled to a second channel (31), with the input terminal and the first output terminal having a first pulse-generating circuit (11) connected between them, and the input terminal and the second output terminal having a second pulse-generating circuit (12) connected between them, and with the first output terminal and the control input of the first pulse-generating circuit (11) having a first interference signal detection circuit (DET1, 111), which provides a first actuating signal (SRE1), connected between them, and the second output terminal and the control input on the second pulse-generating circuit having a second interference signal detection circuit (DET2, 112), which provides a second actuating signal, connected between them.

19. Transmission apparatus according to Claim 18, in which the first pulse-generating circuit (11) provides the pulse sequence (PS1) again as stipulated by the first actuating signal (SRE1) and as stipulated by the second actuating signal (SRE2), and/or in which the second pulse-generating circuit (11) provides the pulse sequence (PS1) again as stipulated by the second actuating signal (SRE2) and as stipulated by the first actuating signal (SRE1).

20. Transmission apparatus according to Claim 19, in which the first interference signal detection circuit (DET1, 101) generates the first actuating signal (SRE1) as stipulated by a second status signal (S2) which indicates whether a second pulse sequence (PS2) is being transmitted to the second channel (31), and/or in which the second interference signal detection circuit (DET2, 102) generates the second actuating signal (SRE1) as stipulated by a first status signal (S1) which indicates whether a first pulse sequence (PS2) is being transmitted to the first channel (31).

21. Transmission apparatus according to one of Claims 13 to 20, in which the at least one pulse-generating circuit (100; 111, 112) generates the pulse sequence (PSH, PSL; PS1, PS2) after a prescribed edge of the input signal (Sin).

22. Transmission apparatus according to one of Claims 13 to 21, in which the at least one pulse-generating circuit (100; 111, 112) repeats the pulse sequence after a prescribed edge of the actuating signal (SRE; SRE1, SRE2) and at a prescribed level of the input signal (Sin).

23. Signal transmission arrangement having a transmission apparatus according to one of the preceding Claims 13 to 22 and a receiver apparatus (2) which has a receiver (201) coupled to the channel and a driver (202) coupled to the channel, which is designed to output signals to the channel which are detected in the transmission apparatus as interference signals.

## Revendications

1. Procédé de transmission d'une information contenue dans un signal d'émission (Sin) par au moins un canal (40, 42, 44) à partir d'un dispositif émetteur (1) vers un récepteur (2), le procédé ayant les caractéristiques suivantes côté émetteur :
- on génère au moins une suite d'impulsions (PS, PS1, PS2) ayant au moins une impulsion suivant l'indication du signal d'émission (Sin),
- côté émetteur on émet une suite d'impulsions (PS, PS1, PS2) vers au moins un canal (40, 42, 44),
- côté émetteur on surveille le canal (40, 42, 44) pour la présence d'un signal perturbateur injecté de l'extérieur dans le canal (40, 42),
- on répète sur le canal (40, 42, 44) la suite d'impulsions (PS, PS1, PS2) en cas de détection côté émetteur d'un signal parasite injecté de l'extérieur dans le canal (40, 42).

2. Procédé selon la revendication 1,
**caractérisé en ce qu'**
on génère au moins une première suite d'impulsions (PS1) ayant au moins une impulsion selon l'indication du signal d'émission (Sin) et on la transmet par un premier canal (42),
on décale dans le temps par rapport à la première suite d'impulsions (PS1), une seconde suite d'impulsions (PS2) ayant au moins une impulsion et on la transmet par un second canal (44), et
après une détection d'un signal parasite sur le premier et/ ou le second canal (42, 44), on répète la transmission de la première suite d'impulsions (PS1), et
après la détection d'un signal parasite sur le second et/ou le premier canal (44, 42) on répète la transmission de la seconde suite d'impulsions (PS2).

3. Procédé selon l'une quelconque des revendications 1 ou 2,
selon lequel
on ne transmet au moins une suite d'impulsions (PS, PS1, PS) que lors de la détection d'un signal parasite, après que l'on ne détecte plus de signal parasite.

4. Procédé selon l'une quelconque des revendications précédentes,
selon lequel
si on détecte un signal parasite avant une première émission de la suite d'impulsions (PS, PS1, PS2, PS3, PS4), on n'émet la suite d'impulsions qu'après n'avoir plus détecté aucun signal parasite.

5. Procédé selon l'une quelconque des revendications précédentes,
selon lequel
le signal d'émission (Sin) est un signal ayant un niveau à deux valeurs un premier niveau de signal et un second niveau de signal (P1, P2), et au moins une suite d'impulsions (PS, PS1, PS2) contient une impulsion qui est générée après un changement de niveau de signal.

6. Procédé selon la revendication 5,
selon lequel
lors d'un changement de niveau du signal d'émission (Sin) passant du premier niveau (P1) au niveau, la suite d'impulsions comprend une impulsion positive par rapport au potentiel de référence, et lors du passage du niveau de signal d'émission (Sin) du second niveau de signal (P2) au premier niveau de signal elle comprend une impulsion négative par rapport au potentiel de référence.

7. Procédé selon la revendication 5,
selon lequel
en cas de changement de niveau du signal d'émission (Sin) passant du premier niveau (P1) au second niveau (P2), on génère la première suite d'impulsions (PS1) ayant au moins une impulsion et on la transmet par un premier canal (42) et lors d'un changement de niveau (P2) du signal d'émission (Sin) passant du second niveau de signal (P2) au premier niveau de signal (P1), on génère une seconde suite d'impulsion (PS2) ayant au moins une impulsion et on la transmet par le second canal (44).

8. Procédé selon l'une quelconque des revendications 1, 2 ou 3,
selon lequel
en cas de changement du signal d'émission passant du premier niveau de signa (P1) au second niveau de signal (P2), on génère une première suite d'impulsion (PS3) comprenant plusieurs impulsions et lors du changement du niveau de signal d'émission passant du second niveau de signal (P2) au premier niveau de signal (P1), on génère une seconde suite d'impulsion (PS4) comprenant plusieurs impulsions, la première suite d'impulsions (PS3) et la seconde suite d'impulsions (PS4) étant différentes et transmises par un canal commun (40).

9. Procédé selon l'une quelconque des revendications précédentes,
selon lequel
on génère au moins une suite d'impulsions en fonction de plusieurs signaux d'émetteur.

10. Procédé selon l'une quelconque des revendications précédentes,
selon lequel
on surveille le canal à l'aide d'un capteur (SEN) voisin du canal.

11. Procédé selon l'une quelconque des revendications précédentes,
selon lequel
côté récepteur, on injecte au moins une impulsion dans le canal qui est détectée comme signal parasite pour produite une répétition de la suite d'impulsions.

12. Utilisation d'un procédé selon l'une quelconque des revendications précédentes, pour la transmission de signal par un canal ayant une barrière de potentiel notamment par un élément de couplage magnétique.

13. Dispositif émetteur comprenant les caractéristiques suivantes :
- une borne d'entrée pour appliquer au moins un signal d'émission (Sin) et au moins une borne de sortie couplée à un canal de transmission (30, 31, 32),
- au moins un circuit générateur d'impulsions (100, 111, 112) branché entre la borne d'entrée et la borne de sortie et ayant au moins une commande d'entrée, circuit qui génère une suite d'impulsions (PS, PS1, PS2) ayant au moins une impulsion selon l'indication du signal d'émetteur,
- un circuit de détection de signal perturbateur (DET, 100 ; DET1, 111 ; DET2, 112) couplé côté émetteur sur le canal pour détecter un signal parasite injecté de l'extérieur dans le canal (40, 42) et qui en fonction de la détection un signal perturbateur injecté de l'extérieur dans le canal (40, 42) fournit un signal de commande (SRE, SRE1, SRE2), et
- le circuit générateur d'impulsions (100, 111, 112) générant de façon répétée la suite d'impulsions (PS, PS1, PS2) selon l'indication du signal de commande (SRE, SRE1, SRE2).

14. Dispositif émetteur selon la revendication 13,
selon lequel
le circuit de détection de signal parasite (DET, 100 ; DET1, 111 ; DET2, 112) est branché entre la borne de sortie du dispositif émetteur (1, 11, 12) et l'entrée de commande du circuit générateur d'impulsions (100, 111, 112).

15. Dispositif émetteur selon la revendication 13, comportant un capteur (SEN) installé au voisinage du canal, et dans lequel
le circuit de détection de signal parasite (DET, 100, DET1, 111, DET2, 112) est branché entre le capteur (SEN) et l'entrée de commande du circuit générateur d'impulsions (100, 111, 112).

16. Dispositif émetteur selon l'une quelconque des revendications 13 à 15,
selon lequel
le circuit de détection de signal parasite (DET, 100 ; DET1, 111 ; DET2, 112) comporte un circuit de détection (DET, DET1, DET2) relié à la borne de sortie du dispositif émetteur et un circuit générateur de signal de commande (100, 111, 112) branché en aval du circuit de détection, pour fournir le signal de commande (SRE, SRE1, SRE2) en fonction du signal de sortie du circuit de détection (DET, DET1, DET2).

17. Dispositif émetteur selon la revendication 16,
selon lequel
le circuit générateur de signal de commande (100, 111, 112) génère le signal de commande (SRE, SRE1, SRE2) en outre indépendamment d'au moins une suite d'impulsions (PSH, PS1, PS1, PS2).

18. Dispositif émetteur selon l'une quelconque des revendications 13 à 17, ayant une première borne de sortie couplée à un premier canal (31), une seconde borne de sortie couplée à un second canal (31), avec entre la borne d'entrée et la première borne de sortie, un premier circuit générateur d'impulsions (11), et entre la borne d'entrée et la seconde borne de sortie, un second circuit générateur d'impulsions (12), et
dans lequel entre la première borne de sortie et l'entrée de commande du premier circuit générateur d'impulsions (11), un premier circuit de détection de signal parasite (DET1, 111) fournit un premier signal de commande (SRE1), et entre la seconde borne de sortie et l'entrée de commande du second circuit générateur d'impulsions, un second circuit de détection de signal parasite (DET2, 112) fournit un second signal de commande.

19. Dispositif émetteur selon la revendication 18,
selon lequel
le premier circuit générateur d'impulsions (11) répète la suite d'impulsions (PS1) selon l'indication du premier signal de commande (SRE1) et selon l'indication du second signal de commande (SRE2), et/ou le second circuit générateur d'impulsions (11) répète la suite d'impulsions (PS1) suivant l'indication du second signal de commande (SRE2) et selon l'indication du premier signal de commande (SRE1).

20. Dispositif émetteur selon la revendication 18,
selon lequel
le premier circuit de détection de signal parasite (DET1, 101) génère le premier signal de commande (SRE1) selon l'indication d'un second signal d'état (S2), indiquant si une seconde suite d'impulsions (PS2) est transmise sur le second canal (31), et/ou le second circuit de détection de signal parasite (DET2, 102) génère le second signal de commande (SRE1) selon l'indication d'un premier signal d'état (S1) indiquant si une première suite d'impulsions (PS2) est transmise sur le premier canal.

21. Dispositif émetteur selon l'une quelconque des revendications 13 à 20,
selon lequel
au moins un circuit générateur d'impulsions (100, 111, 112) génère la suite d'impulsions (PSH, PS1, PS1, PS2) après un flanc prédéterminé du signal d'entrée (Sin).

22. Dispositif émetteur selon l'une quelconque des revendications 13 à 21,
selon lequel
au moins un circuit générateur d'impulsions (100, 111, 112) répète la suite d'impulsions après un flanc prédéterminé du signal de commande (SRE, SRE1, SRE2) et pour un niveau prédéfini du signal d'entrée (Sin).

23. Dispositif de transmission de signal comportant un dispositif émetteur selon l'une quelconque des revendications précédentes 13 à 22, et un dispositif récepteur (2) ayant un récepteur (201) couplé à un canal et un pilote (202) couplé au canal réalisé pour fournir des signaux au canal qui sont détectés comme signaux parasites dans le dispositif émetteur.
